# EUROPEAN PATENT APPLICATION

(11) **EP 4 604 662 A1**
(43) Date of publication of application: **20.08.2025**
(21) Application number: 23893135.6
(22) Date of filing: 28.06.2023
(51) Int. Cl.: H04W 76/15

(54) **MULTI-LINK CONCURRENT CONNECTION METHOD AND APPARATUS, AND DEVICE**

(30) Priority: 26.11.2022 CN 202211495295
(71) Applicant: Huawei Technologies Co., Ltd., Shenzhen, Guangdong 518129 (CN)
(72) Inventor: RUAN, Wei, Shenzhen, Guangdong 518129 (CN); MA, Yunsi, Shenzhen, Guangdong 518129 (CN); HAN, Yunfeng, Shenzhen, Guangdong 518129 (CN); LI, Wenjun, Shenzhen, Guangdong 518129 (CN)
(74) Representative: Pfenning, Meinig & Partner mbB
(86) International application number: PCT/CN2023/103280
(87) International publication number: WO 2024/109035

(57) **Abstract**

This application provides a multi-link concurrent connection method, an apparatus, and a device. The method includes: A first device establishes a multi-link connection to a second device via a first link set, where the first link set includes a first link and a second link; and the first device establishes a multi-link connection to a third device via a second link set, where the second link set includes a third link and a fourth link, and operating frequencies of the third link and the first link are the same, or operating frequencies of the third link, the first link, and the second link are all different. Therefore, low-latency or zero-interruption roaming or a low-latency or zero-interruption multi-network concurrent connection can be implemented.

## Description

This application claims priority to Chinese Patent Application No. 202211495295.5, filed with the China National Intellectual Property Administration on November 26, 2022 and entitled "MULTI-LINK CONCURRENT CONNECTION METHOD, APPARATUS, AND DEVICE", which is incorporated herein by reference in its entirety.

### TECHNICAL FIELD

This application relates to the field of communication technologies, and in particular, to a multi-link concurrent connection method, an apparatus, and a device.

### BACKGROUND

In the Institute of Electrical and Electronics Engineers (institute of electrical and electronics engineers, IEEE) standard 802.11, a multi-link device (multi-link device, MLD) is a logical entity that supports a multi-link operation (multi-link operation, MLO) function, and can implement load balancing, multi-band aggregation, and synchronous downlink/uplink transmission, to achieve an objective of an efficient multi-band operation.

Currently, in a roaming scenario or a multi-network concurrent connection scenario, a non-access point multi-link device (non-access point multi-link device, non-AP MLD) needs to be first disconnected from an original access point multi-link device (access point multi-link device, AP MLD) and then establish a connection to a new AP MLD. Service transmission can be performed between the non-AP MLD and the new AP MLD only after the connection between the non-AP MLD and the new AP MLD is established. The foregoing process may be briefly referred to as disconnection-before-connection between the non-AP MLD and a plurality of AP MLDs.

It can be learned that before the non-AP MLD is disconnected from the original AP MLD, the non-AP MLD cannot be connected to the new AP MLD. As a result, service transmission is interrupted, an interruption time of service transmission is increased, and a low-latency requirement in the roaming scenario or the multi-network concurrent connection scenario cannot be met.

### SUMMARY

This application provides a multi-link concurrent connection method, an apparatus, and a device, to implement low-latency or zero-interruption roaming or a low-latency or zero-interruption multi-network concurrent connection.

According to a first aspect, this application provides a multi-link concurrent connection method, including:
A first device establishes a multi-link connection to a second device via a first link set, where the first link set includes a first link and a second link.

The first device establishes a multi-link connection to a third device via a second link set, where the second link set includes a third link and a fourth link, and operating frequencies of the third link and the first link are the same, or operating frequencies of the third link, the first link, and the second link are all different.

According to the multi-link concurrent connection method provided in the first aspect, the first device may establish the multi-link connection to the third device through a plurality of media access control layer service access points without disconnecting the multi-link connection from the second device, thereby implementing multi-link concurrent connections between the first device and the second device and between the first device and the third device. This can support connection-before-disconnection roaming, reduces an interruption time of service transmission, implements a low-latency or zero-interruption roaming scenario, resolves a problem that an MLO function is incompatible with a low-latency or zero-interruption roaming function, can support a multi-network concurrent connection of a plurality of devices, implements a low-latency or zero-interruption multi-network concurrent connection scenario, resolves a problem that the MLO function is incompatible with a low-latency or zero-interruption multi-network concurrent connection function, further supports functions such as seamless roaming or a multi-network concurrent connection, has advantages such as a high throughput and good network flexibility, and can implement multi-band and multi-link efficient resource management, channel access, coordinated transmission, and the like.

In a possible design, data of a link in the first link set is transmitted through a first media access control layer service access point of the first device, data of a link in the second link set is transmitted through a second media access control layer service access point of the first device, and the first media access control layer service access point of the first device is different from the second media access control layer service access point of the first device.

Therefore, the first device may separately provide two media access control (media access control, MAC) layer interfaces for the second device and the third device through the two media access control layer service access points, so that no conflict occurs during service transmission between the first device and the second device and between the first device and the third device, and the multi-link connection of the first device can be implemented.

In a possible design, before that the first device establishes a multi-link connection to a third device via a second link set, the method further includes:
The first device establishes the second media access control layer service access point of the first device.

Therefore, the second media access control layer service access point may be a newly added media access control layer service access point of the first device. Certainly, the second media access control layer service access point may alternatively be an established media access control layer service access point of the first device.

In a possible design, when the operating frequencies of the third link and the first link are the same and operating frequencies of the fourth link and the second link are the same, the method further includes:
The first device stops transmitting services of all service types between the first device and the second device on the first link, and transmits the service between the first device and the second device on the second link.

The first device transmits a service between the first device and the third device on the third link, and stops transmitting services of all service types between the first device and the third device on the fourth link.

In a possible design, when the operating frequencies of the third link and the first link are the same and operating frequencies of the fourth link, the first link, and the second link are all different, the method further includes:
The first device stops transmitting services of all service types between the first device and the second device on the first link, and transmits the service between the first device and the second device on the second link.

The first device transmits a service between the first device and the third device on the third link and/or the fourth link.

Therefore, the first device can implement a multi-link concurrent connection function through a plurality of media access control layer service access points and by disabling some links.

In a possible design, when the operating frequencies of the third link, the first link, and the second link are all different and an operating frequency of the fourth link and the operating frequency of the first link or the second link are the same, the method further includes:
The first device transmits a service between the first device and the second device on the first link and the second link.

The first device transmits a service between the first device and the third device on the third link, and stops transmitting services of all service types between the first device and the third device on the fourth link.

In a possible design, when the operating frequencies of the third link, the first link, and the second link are all different and operating frequencies of the fourth link, the first link, and the second link are all different, the method further includes:
The first device transmits a service between the first device and the second device on the first link and the second link.

The first device transmits a service between the first device and the third device on the third link and/or the fourth link.

Therefore, the first device can implement a multi-link concurrent connection function through a plurality of media access control layer service access points and based on an operating frequency different from those of links in the first link set.

In this way, the first device can perform service transmission with the second device via the first link set, and the first device can perform service transmission with the third device via the second link set, so that the first device implements the low-latency or zero-interruption multi-network concurrent connection scenario.

In a possible design, before that the first device stops transmitting services of all service types between the first device and the second device on the first link, the method further includes:
The first device sends first information to the second device on one or more links in the first link set, where the first information is used to request to stop transmitting the services of all service types between the first device and the second device on the first link.

The first device receives, on one or more links in the first link set, second information sent by the second device, where the second information is used to determine to stop transmitting the services of all service types between the first device and the second device on the first link.

Therefore, the first device can disable the first link with the second device.

In a possible design, the first information is carried in a first frame, and the second information is carried in a second frame.

In a possible design, the first frame further carries third information, and the third information indicates, to the second device, whether to stop transmitting the services of all service types between the first device and the second device on the first link.

In a possible design, the first frame is a traffic identifier-to-link mapping request frame, and correspondingly, the second frame is a traffic identifier-to-link mapping response frame.

In a possible design, the method further includes:
The first device disconnects the first link set.

The first device transmits the service between the first device and the third device on the third link and/or the fourth link.

Therefore, the first device can switch from both the multi-link connection to the second device and the multi-link connection to the third device to the multi-link connection to the third device, so that the first device implements the low-latency or zero-interruption roaming scenario.

In a possible design, that the first device disconnects the first link set includes:
The first device sends twelfth information to the second device on one or more links in the first link set, where the twelfth information indicates to remove the first link set.

The first device disconnects the first link set.

Therefore, the first device can disconnect the first link set from the second device.

In a possible design, the third information is carried in a twelfth frame.

In a possible design, the twelfth frame is a disassociation frame, and the disassociation frame is used to indicate to disconnect the first link set.

In a possible design, before that the first device transmits the service between the first device and the third device on the fourth link, the method further includes:
The first device sends fourth information to the third device on the third link, where the fourth information is used to request to transmit the service between the first device and the third device on the fourth link.

The first device receives, on the third link, fifth information sent by the third device, where the fifth information is used to determine to transmit the service between the first device and the third device on the fourth link.

Therefore, the first device may resume enabling the fourth link with the third device.

In a possible design, the fourth information is carried in a fourth frame, and the fifth information is carried in a fifth frame.

In a possible design, the fourth frame is a traffic identifier-to-link mapping request frame, and correspondingly, the fifth frame is a traffic identifier-to-link mapping response frame.

In a possible design, that the first device establishes a multi-link connection to a third device via a second link set includes:
The first device sends sixth information on the third link, where the sixth information is used to detect another device except for the second device.

The first device receives, on the third link, seventh information sent by the third device, where the seventh information indicates that the third device is detected.

The first device sends eighth information to the third device on the third link, where the eighth information is used to request to establish the second link set.

The first device receives, on the third link, ninth information sent by the third device, where the ninth information is used to determine to establish the second link set.

The first device establishes the second link set with the third device.

The first device sends tenth information to the third device on the third link, where the tenth information is used to request to stop transmitting the services of all service types between the first device and the third device on the fourth link.

The first device receives, on the third link, eleventh information sent by the third device, where the eleventh information is used to determine to stop transmitting the services of all service types between the first device and the third device on the fourth link.

The first device stops, based on the eleventh information, transmitting the services of all service types between the first device and the third device on the fourth link.

In a possible design, the sixth information is carried in a sixth frame, the seventh information is carried in a seventh frame, the eighth information is carried in an eighth frame, the ninth information is carried in a ninth frame, the tenth information is carried in a tenth frame, and the eleventh information is carried in an eleventh frame.

In a possible design, the sixth frame is a probe request frame, and correspondingly, the seventh frame is a probe response frame.

The eighth frame is an authentication frame and an association request frame, and correspondingly, the ninth frame is an association response frame.

The tenth frame is a traffic identifier-to-link mapping request frame, and correspondingly, the eleventh frame is a traffic identifier-to-link mapping response frame.

In a possible design, that the first device establishes a multi-link connection to a third device via a second link set includes:
The first device sends sixth information on the third link, where the sixth information is used to detect another device except for the second device.

The first device receives, on the third link, seventh information sent by the third device, where the seventh information indicates that the third device is detected.

The first device sends eighth information to the third device on the third link, where the eighth information is used to request to establish the second link set and request to stop transmitting the services of all service types between the first device and the third device on the fourth link.

The first device receives, on the third link, ninth information sent by the third device, where the ninth information is used to determine to establish the second link set and determine to stop transmitting the services of all service types between the first device and the third device on the fourth link.

The first device establishes the second link set with the third device, and stops transmitting the services of all service types between the first device and the third device on the fourth link.

In a possible design, the sixth information is carried in a sixth frame, the seventh information is carried in a seventh frame, the eighth information is carried in an eighth frame, and the ninth information is carried in a ninth frame.

In a possible design, the sixth frame is a probe request frame, and correspondingly, the seventh frame is a probe response frame.

The eighth frame is an authentication frame and an association request frame, and correspondingly, the ninth frame is an association response frame.

In a possible design, that the first device establishes a multi-link connection to a third device via a second link set includes:
The first device sends sixth information on the third link and/or the fourth link, where the sixth information is used to detect another device except for the second device.

The first device receives, on the third link and/or the fourth link, seventh information sent by the third device, where the seventh information indicates that the third device is detected.

The first device sends eighth information to the third device on the third link and/or the fourth link, where the eighth information is used to request to establish the second link set.

The first device receives, on the third link and/or the fourth link, ninth information sent by the third device, where the ninth information is used to determine to establish the second link set.

The first device establishes the second link set with the third device.

In a possible design, the sixth information is carried in a sixth frame, the seventh information is carried in a seventh frame, the eighth information is carried in an eighth frame, and the ninth information is carried in a ninth frame.

In a possible design, the sixth frame is a probe request frame, and correspondingly, the seventh frame is a probe response frame.

The eighth frame is an authentication frame and an association request frame, and correspondingly, the ninth frame is an association response frame.

Therefore, the first device can establish the second link set with the third device.

According to a second aspect, this application provides a multi-link concurrent connection method, including:
A second device establishes a multi-link connection to a first device via a first link set, where the first link set includes a first link and a second link; and the first device further establishes a multi-link connection to a third device via a second link set, where the second link set includes a third link and a fourth link, and operating frequencies of the third link and the first link are the same, or operating frequencies of the third link, the first link, and the second link are all different.

In a possible design, data of a link in the first link set is transmitted through a first media access control layer service access point of the first device, data of a link in the second link set is transmitted through a second media access control layer service access point of the first device, and the first media access control layer service access point of the first device is different from the second media access control layer service access point of the first device.

In a possible design, when the operating frequencies of the third link and the first link are the same and operating frequencies of the fourth link and the second link are the same, the method further includes:
The second device stops transmitting services of all service types between the first device and the second device on the first link, and transmits the service between the first device and the second device on the second link, where the first device transmits a service between the first device and the third device on the third link, and stops transmitting services of all service types between the first device and the third device on the fourth link.

In a possible design, when the operating frequencies of the third link and the first link are the same and operating frequencies of the fourth link, the first link, and the second link are all different, the method further includes:
The second device stops transmitting services of all service types between the first device and the second device on the first link, and transmits the service between the first device and the second device on the second link, where the first device transmits a service between the first device and the third device on the third link and/or the fourth link.

In a possible design, when the operating frequencies of the third link, the first link, and the second link are all different and an operating frequency of the fourth link and the operating frequency of the first link or the second link are the same, the method further includes:
The second device transmits a service between the first device and the second device on the first link and the second link, where the first device transmits a service between the first device and the third device on the third link, and stops transmitting services of all service types between the first device and the third device on the fourth link.

In a possible design, when the operating frequencies of the third link, the first link, and the second link are all different and operating frequencies of the fourth link, the first link, and the second link are all different, the method further includes:
The second device transmits a service between the first device and the second device on the first link and the second link, where the first device transmits a service between the first device and the third device on the third link and/or the fourth link.

In a possible design, before that the second device stops transmitting services of all service types between the first device and the second device on the first link, the method further includes:
The second device receives, on one or more links in the first link set, first information sent by the first device, where the first information is used to request to stop transmitting the services of all service types between the first device and the second device on the first link.

The second device sends second information to the first device on one or more links in the first link set, where the second information is used to determine to stop transmitting the services of all service types between the first device and the second device on the first link.

In a possible design, the first information is carried in a first frame, and the second information is carried in a second frame.

In a possible design, the first frame further carries third information, and the third information indicates, to the second device, whether to stop transmitting the services of all service types between the first device and the second device on the first link.

In a possible design, the first frame is a traffic identifier-to-link mapping request frame, and correspondingly, the second frame is a traffic identifier-to-link mapping response frame.

In a possible design, the method further includes:
The second device disconnects the first link set; and the first device transmits the service between the first device and the third device on the third link and/or the fourth link.

In a possible design, that the second device disconnects the first link set includes:
The second device receives, on one or more links in the first link set, twelfth information sent by the first device, where the twelfth information indicates to remove the first link set.

The second device disconnects the first link set based on the twelfth information.

In a possible design, the third information is carried in a twelfth frame.

In a possible design, the twelfth frame is a disassociation frame, and the disassociation frame is used to indicate to disconnect the first link set.

For beneficial effect of the multi-link concurrent connection method provided in the second aspect and the possible designs of the second aspect, refer to the beneficial effect brought by the first aspect and the possible designs of the first aspect. Details are not described herein again.

According to a third aspect, this application provides a multi-link concurrent connection method, including:
A third device establishes a multi-link connection to a first device via a second link set, where the second link set includes a third link and a fourth link; and the first device further establishes a multi-link connection to a second device via a first link set, where the first link set includes a first link and a second link, and operating frequencies of the third link and the first link are the same, or operating frequencies of the third link, the first link, and the second link are all different.

In a possible design, data of a link in the first link set is transmitted through a first media access control layer service access point of the first device, data of a link in the second link set is transmitted through a second media access control layer service access point of the first device, and the first media access control layer service access point of the first device is different from the second media access control layer service access point of the first device.

In a possible design, when operating frequencies of the fourth link and the second link are the same or an operating frequency of the fourth link and the operating frequency of the first link or the second link are the same, the method further includes:
The third device transmits a service between the first device and the third device on the third link, and stops transmitting services of all service types between the first device and the third device on the fourth link.

In a possible design, the method further includes:
The third device transmits the service between the first device and the third device on the third link and/or the fourth link.

In a possible design, before that the third device transmits the service between the first device and the third device on the fourth link, the method further includes:
The third device receives, on the third link, fourth information sent by the first device, where the fourth information is used to request to transmit the service between the first device and the third device on the fourth link.

The third device determines, based on the fourth information, to transmit the service between the first device and the third device on the fourth link.

The third device sends fifth information to the first device on the third link, where the fifth information is used to determine to transmit the service between the first device and the third device on the fourth link.

In a possible design, the fourth information is carried in a fourth frame, and the fifth information is carried in a fifth frame.

In a possible design, the fourth frame is a traffic identifier-to-link mapping request frame, and correspondingly, the fifth frame is a traffic identifier-to-link mapping response frame.

In a possible design, that a third device establishes a multi-link connection to a first device via a second link set includes:
The third device receives, on the third link, sixth information sent by the first device, where the sixth information is used to detect another device except for the second device.

The third device sends seventh information to the first device on the third link, where the seventh information indicates that the third device is detected.

The third device receives, on the third link, eighth information sent by the first device, where the eighth information is used to request to establish the second link set.

The third device sends ninth information to the first device on the third link, where the ninth information is used to determine to establish the second link set.

The third device establishes the second link set with the first device.

The third device receives, on the third link, tenth information sent by the first device, where the tenth information is used to request to stop transmitting the services of all service types between the first device and the third device on the fourth link.

The third device stops, based on the tenth information, transmitting the services of all service types between the first device and the third device on the fourth link.

The third device sends eleventh information to the first device on the third link, where the eleventh information is used to determine to stop transmitting the services of all service types between the first device and the third device on the fourth link.

In a possible design, the sixth information is carried in a sixth frame, the seventh information is carried in a seventh frame, the eighth information is carried in an eighth frame, the ninth information is carried in a ninth frame, the tenth information is carried in a tenth frame, and the eleventh information is carried in an eleventh frame.

In a possible design, the sixth frame is a probe request frame, and correspondingly, the seventh frame is a probe response frame.

The eighth frame is an authentication frame and an association request frame, and correspondingly, the ninth frame is an association response frame.

The tenth frame is a traffic identifier-to-link mapping request frame, and correspondingly, the eleventh frame is a traffic identifier-to-link mapping response frame.

In a possible design, that a third device establishes a multi-link connection to a first device via a second link set includes:
The third device receives, on the third link, sixth information sent by the first device, where the sixth information is used to detect another device except for the second device.

The third device sends seventh information to the first device on the third link, where the seventh information indicates that the third device is detected.

The third device receives, on the third link, eighth information sent by the first device, where the eighth information is used to request to establish the second link set and request to stop transmitting the services of all service types between the first device and the third device on the fourth link.

The third device establishes the second link set based on the seventh information, and stops transmitting the services of all service types between the first device and the third device on the fourth link.

The third device sends ninth information to the first device on the third link, where the ninth information is used to determine to establish the second link set and determine to stop transmitting the services of all service types between the first device and the third device on the fourth link.

The third device establishes the second link set with the first device, and stops transmitting the services of all service types between the first device and the third device on the fourth link.

In a possible design, the sixth information is carried in a sixth frame, the seventh information is carried in a seventh frame, the eighth information is carried in an eighth frame, and the ninth information is carried in a ninth frame.

In a possible design, the sixth frame is a probe request frame, and correspondingly, the seventh frame is a probe response frame.

The eighth frame is an authentication frame and an association request frame, and correspondingly, the ninth frame is an association response frame.

In a possible design, when operating frequencies of the fourth link, the first link, and the second link are all different, the method further includes:
The third device transmits a service between the first device and the third device on the third link and/or the fourth link.

In a possible design, that a first device establishes a multi-link connection to a third device via a second link set includes:
The third device receives, on the third link and/or the fourth link, sixth information sent by the first device, where the sixth information is used to detect another device except for the second device.

The third device sends seventh information to the first device on the third link and/or the fourth link, where the seventh information indicates that the third device is detected.

The third device receives, on the third link and/or the fourth link, eighth information sent by the first device, where the eighth information is used to request to establish the second link set.

The third device establishes the second link set based on the eighth information.

The third device sends ninth information to the first device on the third link and/or the fourth link, where the ninth information is used to determine to establish the second link set.

The third device establishes the second link set with the first device.

In a possible design, the sixth information is carried in a sixth frame, the seventh information is carried in a seventh frame, the eighth information is carried in an eighth frame, and the ninth information is carried in a ninth frame.

In a possible design, the sixth frame is a probe request frame, and correspondingly, the seventh frame is a probe response frame.

The eighth frame is an authentication frame and an association request frame, and correspondingly, the ninth frame is an association response frame.

For beneficial effect of the multi-link concurrent connection method provided in the third aspect and the possible designs of the third aspect, refer to the beneficial effect brought by the first aspect and the possible designs of the first aspect. Details are not described herein again.

According to a fourth aspect, this application provides a communication apparatus, used in a first device or a part of the first device. The communication apparatus includes:
a transceiver unit and a processing unit, configured to establish a multi-link connection to a second device via a first link set, where the first link set includes a first link and a second link.

The transceiver unit and the processing unit are configured to establish a multi-link connection to a third device via a second link set, where the second link set includes a third link and a fourth link, and operating frequencies of the third link and the first link are the same, or operating frequencies of the third link, the first link, and the second link are all different.

In a possible design, data of a link in the first link set is transmitted through a first media access control layer service access point of the first device, data of a link in the second link set is transmitted through a second media access control layer service access point of the first device, and the first media access control layer service access point of the first device is different from the second media access control layer service access point of the first device.

In a possible design, the processing unit is further configured to establish the second media access control layer service access point of the first device before establishing the multi-link connection to the third device via the second link set.

In a possible design, the transceiver unit and the processing unit are further configured to: when the operating frequencies of the third link and the first link are the same and operating frequencies of the fourth link and the second link are the same,
stop transmitting services of all service types between the first device and the second device on the first link, and transmit the service between the first device and the second device on the second link; and
transmit a service between the first device and the third device on the third link, and stop transmitting services of all service types between the first device and the third device on the fourth link.

In a possible design, the transceiver unit and the processing unit are further configured to: when the operating frequencies of the third link and the first link are the same and operating frequencies of the fourth link, the first link, and the second link are all different,
stop transmitting services of all service types between the first device and the second device on the first link, and transmit the service between the first device and the second device on the second link; and
transmit a service between the first device and the third device on the third link and/or the fourth link.

In a possible design, the transceiver unit and the processing unit are further configured to: when the operating frequencies of the third link, the first link, and the second link are all different and an operating frequency of the fourth link and the operating frequency of the first link or the second link are the same,
transmit a service between the first device and the second device on the first link and the second link; and
transmit a service between the first device and the third device on the third link, and stop transmitting services of all service types between the first device and the third device on the fourth link.

In a possible design, the transceiver unit and the processing unit are further configured to: when the operating frequencies of the third link, the first link, and the second link are all different and operating frequencies of the fourth link, the first link, and the second link are all different,
transmit a service between the first device and the second device on the first link and the second link; and
transmit a service between the first device and the third device on the third link and/or the fourth link.

In a possible design, the transceiver unit is further configured to: before the first device stops transmitting the services of all service types between the first device and the second device on the first link,
send first information to the second device on one or more links in the first link set, where the first information is used to request to stop transmitting the services of all service types between the first device and the second device on the first link; and
receive, on one or more links in the first link set, second information sent by the second device, where the second information is used to determine to stop transmitting the services of all service types between the first device and the second device on the first link.

In a possible design, the first information is carried in a first frame, and the second information is carried in a second frame.

In a possible design, the first frame further carries third information, and the third information indicates, to the second device, whether to stop transmitting the services of all service types between the first device and the second device on the first link.

In a possible design, the first frame is a traffic identifier-to-link mapping request frame, and correspondingly, the second frame is a traffic identifier-to-link mapping response frame.

In a possible design, the processing unit is further configured to disconnect the first link set.

The transceiver unit is further configured to transmit the service between the first device and the third device on the third link and/or the fourth link.

In a possible design, the transceiver unit is further configured to send twelfth information to the second device on one or more links in the first link set, where the twelfth information indicates to remove the first link set.

The processing unit is configured to disconnect the first link set after the transceiver unit sends the twelfth information.

In a possible design, the third information is carried in a twelfth frame.

In a possible design, the twelfth frame is a disassociation frame, and the disassociation frame is used to indicate to disconnect the first link set.

In a possible design, the transceiver unit is further configured to: before the transceiver unit transmits the service between the first device and the third device on the fourth link,
send fourth information to the third device on the third link, where the fourth information is used to request to transmit the service between the first device and the third device on the fourth link; and
receive, on the third link, fifth information sent by the third device, where the fifth information is used to determine to transmit the service between the first device and the third device on the fourth link.

In a possible design, the fourth information is carried in a fourth frame, and the fifth information is carried in a fifth frame.

In a possible design, the fourth frame is a traffic identifier-to-link mapping request frame, and correspondingly, the fifth frame is a traffic identifier-to-link mapping response frame.

In a possible design, the transceiver unit is specifically configured to send sixth information on third link, where the sixth information is used to detect another device except for the second device.

The transceiver unit is specifically configured to receive, on the third link, seventh information sent by the third device, where the seventh information indicates that the third device is detected.

The transceiver unit is specifically configured to send eighth information to the third device on the third link, where the eighth information is used to request to establish the second link set.

The transceiver unit is specifically configured to receive, on the third link, ninth information sent by the third device, where the ninth information is used to determine to establish the second link set.

The processing unit is specifically configured to establish the second link set with the third device.

The transceiver unit is specifically configured to send tenth information to the third device on the third link, where the tenth information is used to request to stop transmitting the services of all service types between the first device and the third device on the fourth link.

The transceiver unit is specifically configured to receive, on the third link, eleventh information sent by the third device, where the eleventh information is used to determine to stop transmitting the services of all service types between the first device and the third device on the fourth link.

The processing unit is specifically configured to stop, based on the eleventh information, transmitting the services of all service types between the first device and the third device on the fourth link.

In a possible design, the sixth information is carried in a sixth frame, the seventh information is carried in a seventh frame, the eighth information is carried in an eighth frame, the ninth information is carried in a ninth frame, the tenth information is carried in a tenth frame, and the eleventh information is carried in an eleventh frame.

In a possible design, the sixth frame is a probe request frame, and correspondingly, the seventh frame is a probe response frame.

The eighth frame is an authentication frame and an association request frame, and correspondingly, the ninth frame is an association response frame.

The tenth frame is a traffic identifier-to-link mapping request frame, and correspondingly, the eleventh frame is a traffic identifier-to-link mapping response frame.

In a possible design, the transceiver unit is specifically configured to send sixth information on third link, where the sixth information is used to detect another device except for the second device.

The transceiver unit is specifically configured to receive, on the third link, seventh information sent by the third device, where the seventh information indicates that the third device is detected.

The transceiver unit is specifically configured to send eighth information to the third device on the third link, where the eighth information is used to request to establish the second link set and request to stop transmitting the services of all service types between the first device and the third device on the fourth link.

The transceiver unit is specifically configured to receive, on the third link, ninth information sent by the third device, where the ninth information is used to determine to establish the second link set and determine to stop transmitting the services of all service types between the first device and the third device on the fourth link.

The processing unit is specifically configured to establish the second link set with the third device, and stop transmitting the services of all service types between the first device and the third device on the fourth link.

In a possible design, the sixth information is carried in a sixth frame, the seventh information is carried in a seventh frame, the eighth information is carried in an eighth frame, and the ninth information is carried in a ninth frame.

In a possible design, the sixth frame is a probe request frame, and correspondingly, the seventh frame is a probe response frame.

The eighth frame is an authentication frame and an association request frame, and correspondingly, the ninth frame is an association response frame.

In a possible design, the transceiver unit is specifically configured to send sixth information on the third link and/or the fourth link, where the sixth information is used to detect another device except for the second device.

The transceiver unit is specifically configured to receive, on the third link and/or the fourth link, seventh information sent by the third device, where the seventh information indicates that the third device is detected.

The transceiver unit is specifically configured to send eighth information to the third device on the third link and/or the fourth link, where the eighth information is used to request to establish the second link set.

The transceiver unit is specifically configured to receive, on the third link and/or the fourth link, ninth information sent by the third device, where the ninth information is used to determine to establish the second link set.

The processing unit is specifically configured to establish the second link set with the third device.

In a possible design, the sixth information is carried in a sixth frame, the seventh information is carried in a seventh frame, the eighth information is carried in an eighth frame, and the ninth information is carried in a ninth frame.

In a possible design, the sixth frame is a probe request frame, and correspondingly, the seventh frame is a probe response frame.

The eighth frame is an authentication frame and an association request frame, and correspondingly, the ninth frame is an association response frame.

For beneficial effect of the communication apparatus provided in the fourth aspect and the possible designs of the fourth aspect, refer to the beneficial effect brought by the first aspect and the possible designs of the first aspect. Details are not described herein again.

According to a fifth aspect, this application provides a communication apparatus, used in a second device or a part of the second device. The communication apparatus includes:
a transceiver unit and a processing unit, configured to establish a multi-link connection to a first device via a first link set, where the first link set includes a first link and a second link; and the first device further establishes a multi-link connection to a third device via a second link set, where the second link set includes a third link and a fourth link, and operating frequencies of the third link and the first link are the same, or operating frequencies of the third link, the first link, and the second link are all different.

In a possible design, data of a link in the first link set is transmitted through a first media access control layer service access point of the first device, data of a link in the second link set is transmitted through a second media access control layer service access point of the first device, and the first media access control layer service access point of the first device is different from the second media access control layer service access point of the first device.

In a possible design, the transceiver unit and the processing unit are further configured to: when the operating frequencies of the third link and the first link are the same and operating frequencies of the fourth link and the second link are the same,
stop transmitting services of all service types between the first device and the second device on the first link, and transmit the service between the first device and the second device on the second link, where the first device transmits a service between the first device and the third device on the third link, and stops transmitting services of all service types between the first device and the third device on the fourth link.

In a possible design, the transceiver unit and the processing unit are further configured to: when the operating frequencies of the third link and the first link are the same and operating frequencies of the fourth link, the first link, and the second link are all different,
stop transmitting services of all service types between the first device and the second device on the first link, and transmit the service between the first device and the second device on the second link, where the first device transmits a service between the first device and the third device on the third link and/or the fourth link.

In a possible design, the transceiver unit and the processing unit are further configured to: when the operating frequencies of the third link, the first link, and the second link are all different and an operating frequency of the fourth link and the operating frequency of the first link or the second link are the same,
transmit a service between the first device and the second device on the first link and the second link, where the first device transmits a service between the first device and the third device on the third link, and stops transmitting services of all service types between the first device and the third device on the fourth link.

In a possible design, the transceiver unit and the processing unit are further configured to: when the operating frequencies of the third link, the first link, and the second link are all different and operating frequencies of the fourth link, the first link, and the second link are all different,
transmit a service between the first device and the second device on the first link and the second link, where the first device transmits a service between the first device and the third device on the third link and/or the fourth link.

In a possible design, the transceiver unit is further configured to: before the transceiver unit stops transmitting the services of all service types between the first device and the second device on the first link,
receive, on one or more links in the first link set, first information sent by the first device, where the first information is used to request to stop transmitting the services of all service types between the first device and the second device on the first link; and
send second information to the first device on one or more links in the first link set, where the second information is used to determine to stop transmitting the services of all service types between the first device and the second device on the first link.

In a possible design, the first information is carried in a first frame, and the second information is carried in a second frame.

In a possible design, the first frame further carries third information, and the third information indicates, to the second device, whether to stop transmitting the services of all service types between the first device and the second device on the first link.

In a possible design, the first frame is a traffic identifier-to-link mapping request frame, and correspondingly, the second frame is a traffic identifier-to-link mapping response frame.

In a possible design, the processing unit is further configured to disconnect the first link set; and the first device transmits the service between the first device and the third device on the third link and/or the fourth link.

In a possible design, the transceiver unit is further configured to receive, on one or more links in the first link set, twelfth information sent by the first device, where the twelfth information indicates to remove the first link set.

The processing unit is specifically configured to disconnect the first link set based on the twelfth information.

In a possible design, the third information is carried in a twelfth frame.

In a possible design, the twelfth frame is a disassociation frame, and the disassociation frame is used to indicate to disconnect the first link set.

For beneficial effect of the communication apparatus provided in the fifth aspect and the possible designs of the fifth aspect, refer to the beneficial effect brought by the second aspect and the possible designs of the second aspect. Details are not described herein again.

According to a sixth aspect, this application provides a communication apparatus, used in a third device or a part of the third device. The communication apparatus includes:
a transceiver unit and a processing unit, configured to establish a multi-link connection to a first device via a second link set, where the second link set includes a third link and a fourth link; and the first device further establishes a multi-link connection to a second device via a first link set, where the first link set includes a first link and a second link, and operating frequencies of the third link and the first link are the same, or operating frequencies of the third link, the first link, and the second link are all different.

In a possible design, data of a link in the first link set is transmitted through a first media access control layer service access point of the first device, data of a link in the second link set is transmitted through a second media access control layer service access point of the first device, and the first media access control layer service access point of the first device is different from the second media access control layer service access point of the first device.

In a possible design, the transceiver unit and the processing unit are further configured to: when operating frequencies of the fourth link and the second link are the same or an operating frequency of the fourth link and the operating frequency of the first link or the second link are the same,
transmit a service between the first device and the third device on the third link, and stop transmitting services of all service types between the first device and the third device on the fourth link.

In a possible design, the transceiver unit is further configured to transmit the service between the first device and the third device on the third link and/or the fourth link.

In a possible design, the transceiver unit and the processing unit are further configured to: before the transceiver unit transmits the service between the first device and the third device on the fourth link,
receive, on the third link, fourth information sent by the first device, where the fourth information is used to request to transmit the service between the first device and the third device on the fourth link;
determine, based on the fourth information, to transmit the service between the first device and the third device on the fourth link; and
send fifth information to the first device on the third link, where the fifth information is used to determine to transmit the service between the first device and the third device on the fourth link.

In a possible design, the fourth information is carried in a fourth frame, and the fifth information is carried in a fifth frame.

In a possible design, the fourth frame is a traffic identifier-to-link mapping request frame, and correspondingly, the fifth frame is a traffic identifier-to-link mapping response frame.

In a possible design, the transceiver unit is specifically configured to receive, on the third link, sixth information sent by the first device, where the sixth information is used to detect another device except for the second device.

The transceiver unit is specifically configured to send seventh information to the first device on the third link, where the seventh information indicates that the third device is detected.

The transceiver unit is specifically configured to receive, on the third link, eighth information sent by the first device, where the eighth information is used to request to establish the second link set.

The transceiver unit is specifically configured to send ninth information to the first device on the third link, where the ninth information is used to determine to establish the second link set.

The processing unit is specifically configured to establish the second link set with the first device.

The transceiver unit is specifically configured to receive, on the third link, tenth information sent by the first device, where the tenth information is used to request to stop transmitting the services of all service types between the first device and the third device on the fourth link.

The processing unit is specifically configured to stop, based on the tenth information, transmitting the services of all service types between the first device and the third device on the fourth link.

The transceiver unit is specifically configured to send eleventh information to the first device on the third link, where the eleventh information is used to determine to stop transmitting the services of all service types between the first device and the third device on the fourth link.

In a possible design, the sixth information is carried in a sixth frame, the seventh information is carried in a seventh frame, the eighth information is carried in an eighth frame, the ninth information is carried in a ninth frame, the tenth information is carried in a tenth frame, and the eleventh information is carried in an eleventh frame.

In a possible design, the sixth frame is a probe request frame, and correspondingly, the seventh frame is a probe response frame.

The eighth frame is an authentication frame and an association request frame, and correspondingly, the ninth frame is an association response frame.

The tenth frame is a traffic identifier-to-link mapping request frame, and correspondingly, the eleventh frame is a traffic identifier-to-link mapping response frame.

In a possible design, the transceiver unit is specifically configured to receive, on the third link, sixth information sent by the first device, where the sixth information is used to detect another device except for the second device.

The transceiver unit is specifically configured to send seventh information to the first device on the third link, where the seventh information indicates that the third device is detected.

The transceiver unit is specifically configured to receive, on the third link, eighth information sent by the first device, where the eighth information is used to request to establish the second link set and request to stop transmitting the services of all service types between the first device and the third device on the fourth link.

The processing unit is specifically configured to establish the second link set based on the seventh information, and stop transmitting the services of all service types between the first device and the third device on the fourth link.

The transceiver unit is specifically configured to send ninth information to the first device on the third link, where the ninth information is used to determine to establish the second link set and determine to stop transmitting the services of all service types between the first device and the third device on the fourth link.

The transceiver unit is specifically configured to establish the second link set with the first device, and stop transmitting the services of all service types between the first device and the third device on the fourth link.

In a possible design, the sixth information is carried in a sixth frame, the seventh information is carried in a seventh frame, the eighth information is carried in an eighth frame, and the ninth information is carried in a ninth frame.

In a possible design, the sixth frame is a probe request frame, and correspondingly, the seventh frame is a probe response frame.

The eighth frame is an authentication frame and an association request frame, and correspondingly, the ninth frame is an association response frame.

In a possible design, the transceiver unit is further configured to: when operating frequencies of the fourth link, the first link, and the second link are all different,
transmit a service between the first device and the third device on the third link and/or the fourth link.

In a possible design, the transceiver unit is specifically configured to receive, on the third link and/or the fourth link, sixth information sent by the first device, where the sixth information is used to detect another device except for the second device.

The transceiver unit is specifically configured to send seventh information to the first device on the third link and/or the fourth link, where the seventh information indicates that the third device is detected.

The transceiver unit is specifically configured to receive, on the third link and/or the fourth link, eighth information sent by the first device, where the eighth information is used to request to establish the second link set.

The processing unit is specifically configured to establish the second link set based on the eighth information.

The transceiver unit is specifically configured to send ninth information to the first device on the third link and/or the fourth link, where the ninth information is used to determine to establish the second link set.

The processing unit is specifically configured to establish the second link set with the first device.

In a possible design, the sixth information is carried in a sixth frame, the seventh information is carried in a seventh frame, the eighth information is carried in an eighth frame, and the ninth information is carried in a ninth frame.

In a possible design, the sixth frame is a probe request frame, and correspondingly, the seventh frame is a probe response frame.

The eighth frame is an authentication frame and an association request frame, and correspondingly, the ninth frame is an association response frame.

For beneficial effect of the communication apparatus provided in the sixth aspect and the possible designs of the sixth aspect, refer to the beneficial effect brought by the third aspect and the possible designs of the third aspect. Details are not described herein again.

According to a seventh aspect, this application provides a wireless communication system, including a first device configured to perform the method in any one of the first aspect and the possible designs of the first aspect, a second device configured to perform the method in any one of the second aspect and the possible designs of the second aspect, and a third device configured to perform the method in any one of the third aspect and the possible designs of the third aspect.

According to an eighth aspect, this application provides a communication apparatus, where the communication apparatus includes a transceiver, a processor, and a memory. The memory stores a computer program or instructions. The processor is configured to control the transceiver to receive and send a signal, and the processor is configured to invoke and run the computer program or the instructions stored in the memory, so that the processor implements the method in any one of the foregoing aspects and the possible designs of the aspect.

According to a ninth aspect, this application provides a communication apparatus, including a processor, where the processor is configured to invoke a computer program or instructions in a memory, so that the communication apparatus performs the method in any one of the foregoing aspects and the possible designs of the aspect.

Optionally, the communication apparatus further includes the memory, and the memory is configured to store program instructions. The processor is coupled to the memory through an interface.

According to a tenth aspect, this application provides a chip apparatus, including a processor, configured to invoke a computer program or instructions in a memory, so that the processor performs the method in any one of the foregoing aspects and the possible designs of the aspect.

Optionally, the processor is coupled to the memory through an interface.

According to an eleventh aspect, this application provides a chip, including an interface circuit and a logic circuit, where the interface circuit is configured to receive a signal from another chip except for the chip and transmit the signal to the logic circuit, or send a signal from the logic circuit to another chip except for the chip; and the logic circuit is configured to implement the method in any one of the foregoing aspects and the possible designs of the aspect.

According to a twelfth aspect, this application provides a computer-readable storage medium, where the computer-readable storage medium stores a computer program or instructions, and the computer program or the instructions are set to perform the method in any one of the foregoing aspects and the possible designs of the aspect.

According to a thirteenth aspect, this application provides a computer program product. When the computer program product runs on a computer, the computer is enabled to perform the method in any one of the foregoing aspects and the possible designs of the aspect.

### BRIEF DESCRIPTION OF DRAWINGS

FIG. 1 is a diagram of an architecture of a wireless communication system according to an embodiment of this application;
FIG. 2 is a diagram of a structure of a WLAN device according to an embodiment of this application;
FIG. 3 is an interaction flowchart of a multi-link concurrent connection method according to an embodiment of this application;
FIG. 4 is a diagram of a roaming scenario according to an embodiment of this application;
FIG. 5 is a diagram of a multi-network concurrent connection scenario according to an embodiment of this application;
FIG. 6 is an interaction flowchart of a multi-link concurrent connection method according to an embodiment of this application;
FIG. 7 is an interaction flowchart of a multi-link concurrent connection method according to an embodiment of this application;
FIG. 8 is an interaction flowchart of a multi-link concurrent connection method according to an embodiment of this application;
FIG. 9 is an interaction flowchart of a multi-link concurrent connection method according to an embodiment of this application;
FIG. 10 to FIG. 14 each are an interaction diagram of a plurality of devices according to an embodiment of this application;
FIG. 15 is an interaction flowchart of a multi-link concurrent connection method according to an embodiment of this application;
FIG. 16 is an interaction flowchart of a multi-link concurrent connection method according to an embodiment of this application;
FIG. 17 is an interaction flowchart of a multi-link concurrent connection method according to an embodiment of this application;
FIG. 18 is an interaction flowchart of a multi-link concurrent connection method according to an embodiment of this application;
FIG. 19 is an interaction flowchart of a multi-link concurrent connection method according to an embodiment of this application;
FIG. 20 is a diagram of a structure of a communication apparatus according to an embodiment of this application;
FIG. 21 is a diagram of a structure of a communication apparatus according to an embodiment of this application;
FIG. 22 is a diagram of a structure of a communication apparatus according to an embodiment of this application; and
FIG. 23 is a diagram of a hardware structure of a communication apparatus according to an embodiment of this application.

### DESCRIPTION OF EMBODIMENTS

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one item (piece) of a, b, or c may represent: a, b, c, a combination of a and b, a combination of a and c, a combination of b and c, or a combination of a, b and c, where each of a, b, and c may be singular or plural. In addition, terms "first" and "second" are merely used for a purpose of description, and shall not be understood as an indication or implication of relative importance. Orientations or location relationships indicated by terms such as "center", "vertical", "horizontal", "upper", "lower", "left", "right", "front", and "back" are based on orientations or location relationships shown in accompanying drawings, and are merely intended for ease of describing this application and simplifying descriptions, rather than indicating or implying that an indicated apparatus or element needs to have a specific orientation or needs to be constructed and operated in the specific orientation, and therefore cannot be understood as a limitation this application.

Some terms in this application are first described below, to help a person skilled in the art have a better understanding.

### 1. Multi-link (multi-link, ML)

The ML is used as one of key technologies in IEEE 802.11be, to achieve an extremely high throughput (extremely high throughput, EHT). A core idea of the multi-link is that a wireless local area network (wireless local area network, WLAN) device that supports the next-generation IEEE 802.11 standard has multi-band (multi-band) transmitting and receiving capabilities, so that a larger bandwidth can be used for service transmission. This significantly increases the throughput. A spatial path for performing access and service transmission on one frequency band may be referred to as a link (Link), so that access and service transmission on a plurality of frequency bands become an ML. In addition, the multi-link helps reduce a latency and improve robustness.

For example, a multi-band includes but is not limited to all or some of a 2.4 gigahertz (GHz) wireless fidelity (wireless fidelity, Wi-Fi) frequency band, a 5 GHz Wi-Fi frequency band, a 6 GHz Wi-Fi frequency band, and a high-frequency 60 GHz frequency band.

Access frequencies of different links are different. In addition, access frequency bands of the different links may be different. Alternatively, access frequency bands of the different links may be the same, that is, the different links may be located on a same frequency band. In this case, the different links may access different channels of a same frequency band, to perform service transmission on the different channels.

### 2. MLD, also referred to as a multi-band device (multi-band device)

The MLD is a WLAN device that supports a plurality of links at the same time. In other words, the MLD has a capability of transmitting and receiving on a plurality of frequency bands. Compared with a device that supports only single-link transmission, the MLD has higher transmission efficiency and a higher throughput.

The MLD may also be referred to as the multi-band device (multi-band device), or the MLD may have another name. This is not specifically limited in this application.

The MLD includes a plurality of affiliated stations (affiliated stations, affiliated STAs).

The affiliated station is a logical station. The affiliated station may be an access point station (access point station, AP STA) or a non-access point station (non-access point station, non-AP STA).

For brevity of description, a multi-link device whose affiliated station is an AP STA is referred to as an AP MLD in this application. The AP STA is referred to as an affiliated AP. Therefore, the AP MLD includes a plurality of affiliated APs, and the affiliated AP is a logical AP.

An MLD whose affiliated station is a non-AP STA is referred to as a non-AP MLD. The non-AP STA is referred to as an affiliated STA. Therefore, the non-AP MLD includes a plurality of affiliated STAs, and the affiliated STA is a logical STA.

The AP MLD may also be referred to as a multi-link AP or a multi-link AP device, or may have another name. This is not specifically limited in this application. The non-AP MLD may also be referred to as a multi-link STA, a multi-link STA device, or a STA MLD, or may have another name. This is not specifically limited in this application.

Currently, on a common frequency band or a channel supported by devices, a non-AP MLD and an AP MLD that support an MLO function may perform discovery, synchronization, (de)authentication, (re)association, disassociation, and resource management with each other, thereby implementing a high-throughput and low-latency multi-band and multi-link concurrent connection with flexible service configuration.

The foregoing multi-link concurrent connection means that at least one non-AP MLD and a plurality of AP MLDs can implement establishment of a plurality of links, and the at least one non-AP MLD and one or more AP MLDs in the plurality of AP MLDs can perform service transmission on the plurality of links based on a link indicator or a user configuration, to implement a roaming scenario or a multi-network concurrent connection scenario. The link indicator may include channel quality, a throughput, or another indicator.

On any link between a non-AP MLD and an AP MLD, an association request frame (association request frame) and an association response frame (association response frame), or a reassociation request frame (reassociation request frame) and a reassociation response frame (reassociation response frame) are exchanged to notify a link capability and related parameters, so as to implement multi-link establishment between the non-AP MLD and the AP MLD.

In a conventional technology, an MLD has only a unique media access control layer (media access control layer, MAC layer) service access point (service access port, SAP) used to access a logical link control (logical link control, LLC) layer; and one MAC interface can be provided for the MLD and corresponds to a unique MAC address (which may also be referred to as a physical address or a hardware address), that is, one MAC data service is provided.

It should be understood that the 802.11 series standards focus on a physical layer (physical layer, PHY) part and a MAC layer part of the MLD.

Each affiliated station (for example, an affiliated STA and an affiliated AP) in the MLD has a station management entity (station management entity, SME).

The SME is an entity independent of a layer, and is located in a separate management plane or on a side (off to the side). For some functions of the SME, refer to definitions in the 802.11 series standards.

The SME may control and manage a MAC layer through interacting with a MAC sublayer management entity (MAC sublayer management entity, MLME), and may control and manage a PHY layer through interacting with a PHY sublayer management entity (PHY sublayer management entity, PLME).

The MAC layer includes an MLD upper MAC sublayer and an MLD lower MAC sublayer. Functions of the MLD upper MAC sublayer include: 1. authentication and connection; 2. security key generation; 3. frame sequence number allocation; 4. frame encryption and decryption; 5. data packet recording and reordering; and 6. selection of an L-MAC module for sending data and information exchange with L-MAC. Functions of the MLD lower MAC sublayer include: 1. link-level management information exchange and indication, for example, a beacon (beacon) message; and 2. link-level control information exchange and indication, for example, a request to send (request to send, RTS) frame and a clear to send (clear to send, CTS) frame.

It can be learned that a non-AP MLD also has a unique SAP that corresponds to a unique MAC address, and affiliated APs associated with an AP MLD respectively have different MAC addresses. The AP MLD also has a unique SAP that corresponds to a unique MAC address, and affiliated STAs associated with the non-AP MLD respectively have different MAC addresses.

Based on this, in the roaming scenario or the multi-network concurrent connection scenario, because the MLD provides only one SAP, the non-AP MLD needs to be first disconnected from an original AP MLD and then establish a connection to a new AP MLD. Service transmission can be performed between the non-AP MLD and the new AP MLD only after the connection between the non-AP MLD and the new AP MLD is established.

Otherwise, only the unique MAC interface provided by the unique SAP is used, and even if a plurality of links between the non-AP MLD and the original AP MLD are established, service transmission between the non-AP MLD and the original AP MLD also conflicts with service transmission between the non-AP MLD and the new AP MLD.

Therefore, before the non-AP MLD is disconnected from the original AP MLD, the affiliated STA in the non-AP MLD cannot be connected to the new AP MLD or an affiliated AP in the new AP MLD. As a result, service transmission is interrupted, and low-latency roaming or a low-latency multi-network concurrent connection cannot be implemented.

To resolve the foregoing problems, this application provides a multi-link concurrent connection method, an apparatus, and a device. A multi-link connection to a new device is supported by increasing a quantity of SAPs and through a plurality of MAC interfaces provided by a plurality of SAPs, while a multi-link connection to an original device is maintained. Therefore, connection-before-disconnection roaming or multi-network concurrent connection of a plurality of devices can be supported, an interruption time of service transmission can be reduced, and a low-latency or zero-interruption roaming scenario or a low-latency or zero-interruption multi-network concurrent connection scenario can be implemented. This helps improve user experience and communication efficiency.

The multi-link concurrent connection method in this application may be applied to a roaming scenario of a wireless communication system, for example, a scenario in which at least one non-AP MLD roams between at least two AP MLDs, or may be applied to a multi-network concurrent connection scenario of the wireless communication system, for example, a scenario in which at least one non-AP MLD is in multi-network concurrent connection to at least two AP MLDs, for example, a local network and an internet, or a restricted network and an internet.

The wireless communication system may include but is limited to a WLAN or a cellular network. The method may be implemented by a communication device in the wireless communication system, or a processor, a chip, or a chip system in the communication device. The communication device may be a communication device that supports parallel service transmission on a plurality of links, for example, an MLD. For example, in the WLAN, the MLD may implement wireless communication in compliance with 802.11 series standards. The 802.11 series standards include 802.11be, 802.11ax, 802.11a/b/g/n/ac, a next-generation standard, or the like.

Certainly, this application is further applicable to another possible wireless communication system, for example, a narrowband internet of things (narrowband internet of things, NB-IoT) system, a long term evolution (long term evolution, LTE) system, a 5th generation (the 5th generation, 5G) communication system, a 6th generation (the 6th generation, 6G) communication system, or another communication system evolved after 5G.

It should be understood that the foregoing descriptions are merely examples for describing the wireless communication system, and the wireless communication system to which this application is applicable is not limited thereto. Details are not described one by one herein.

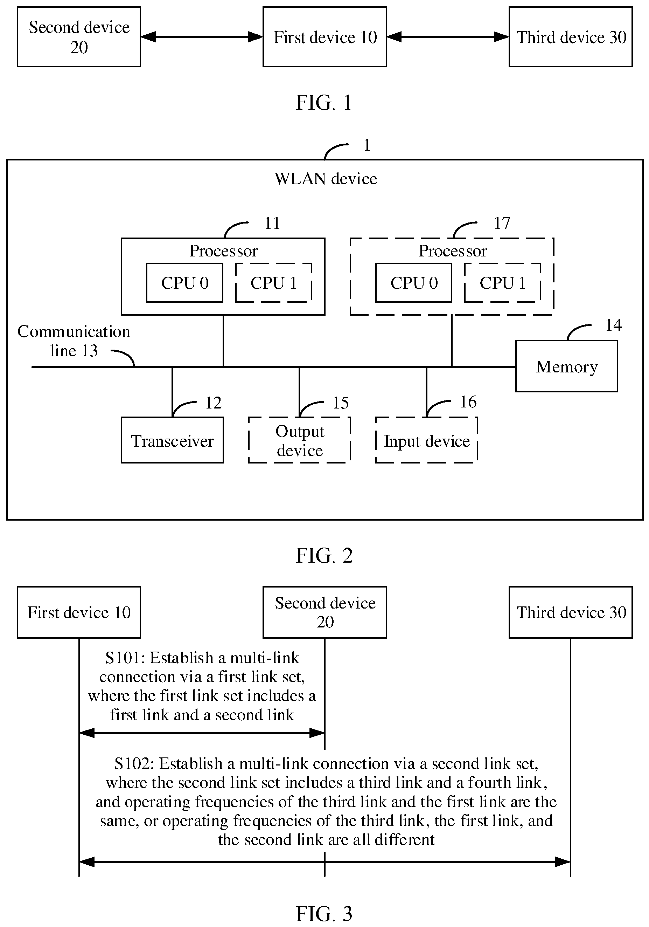

FIG. 1 is a diagram of an architecture of a wireless communication system according to an embodiment of this application. As shown in FIG. 1, the wireless communication system in this application may include a first device 10, a second device 20, and a third device 30.

The first device 10 may be a non-AP MLD, or a processor, a chip, a chip system, or the like in the non-AP MLD. The second device 20 or the third device 30 may be an AP MLD, or a processor, a chip, a chip system, or the like in the AP MLD.

The first device 10 may include one or more SAPs. The first device 10 may further establish a new SAP.

In a possible implementation, the first device 10 may include one SAP. In a roaming scenario or a multi-network concurrent connection scenario, the first device 10 may establish one or more new SAPs.

In a possible implementation, the first device 10 may include a plurality of SAPs. In a roaming scenario or a multi-network concurrent connection scenario, the first device 10 may directly use the plurality of SAPs, or may establish one or more new SAPs.

Different SAPs may provide different MAC interfaces for the first device 10, and correspond to different MAC addresses, that is, provide a plurality of MAC data services.

For ease of description, in FIG. 1, an example in which the first device 10 includes different SAP 1 and SAP 2 is used for illustration.

The first device 10 may establish a plurality of links 1 with the second device 20 through the SAP 1, and may perform service transmission with the second device 20 on the plurality of links 1 through the SAP 1.

In other words, a multi-link connection and service transmission between the first device 10 and the second device 20 are actually a multi-link connection and service transmission between a plurality of affiliated STAs in the first device 10 and a plurality of affiliated APs in the second device 20 on the plurality of links 1.

In the plurality of links 1, each link 1 corresponds to one affiliated STA in the first device 10 and one affiliated AP in the second device 20. Different links 1 correspond to different affiliated STAs in the first device 10 and different affiliated APs in the second device 20. Data of each link 1 passes through a MAC interface provided by the SAP 1. Operating frequencies of the links 1 are different. Operating frequency bands of the links 1 may be the same or different.

Parameters such as a quantity of links of the plurality of links 1, an operating frequency (namely, an access frequency) of each link 1, and an operating frequency band (namely, an access frequency band) of each link 1 are not limited in this application.

For ease of description, in FIG. 1, an example in which the plurality of links 1 include two links: a link 1 and a link 2 is used for illustration.

On the link 1, a multi-link connection and service transmission may be performed, through the MAC interface provided by the SAP 1, between an affiliated STA that is in the first device 10 and that corresponds to the link 1 and an affiliated AP that is in the second device 20 and that corresponds to the link 1.

On the link 2, a multi-link connection and service transmission may be performed, through the MAC interface provided by the SAP 1, between an affiliated STA that is in the first device 10 and that corresponds to the link 2 and an affiliated AP that is in the second device 20 and that corresponds to the link 2.

The first device 10 may establish a plurality of links 2 with the third device 30 through the SAP 2, and may perform service transmission with the third device 30 on the plurality of links 2 through the SAP 2.

In other words, a multi-link connection and service transmission between the first device 10 and the third device 30 are actually a multi-link connection and service transmission between a plurality of affiliated STAs in the first device 10 and a plurality of affiliated APs in the third device 30 on the plurality of links 2.

In the plurality of links 2, each link 2 corresponds to one affiliated STA in the first device 10 and one affiliated AP in the third device 30. Different links 2 correspond to different affiliated STAs in the first device 10 and different affiliated APs in the third device 30. Data of each link 2 passes through a MAC interface provided by the SAP 2. Operating frequencies of the links 2 are different. Operating frequency bands of the links 2 may be the same or different.

Parameters such as a quantity of links of the plurality of links 2, an operating frequency band of each link 2, and an operating frequency band of each link 2 are not limited in this application.

In addition, parameters such as the quantity of links, the operating frequencies, and the operating frequency bands of the plurality of links 1, and affiliated STAs that are in the first device 10 and that correspond to the plurality of links 1 may be the same as or different from parameters such as the quantity of links, the operating frequencies, and the operating frequency bands of the plurality of links 2, and affiliated STAs that are in the first device 10 and that correspond to the plurality of links 2, provided that the data of the plurality of links 1 and the data of the plurality of links 2 respectively pass through MAC interfaces provided by different SAPs of the first device 10.

For ease of description, in FIG. 1, an example in which the plurality of links 2 include two links: a link 3 and a link 4 is used for illustration.

On the link 3, a multi-link connection and service transmission may be performed, through the MAC interface provided by the SAP 2, between an affiliated STA that is in the first device 10 and that corresponds to the link 3 and an affiliated AP that is in the third device 30 and that corresponds to the link 3.

On the link 4, a multi-link connection and service transmission may be performed, through the MAC interface provided by the SAP 2, between an affiliated STA that is in the third device 30 and that corresponds to the link 4 and an affiliated AP that is in the third device 30 and that corresponds to the link 4.

It should be understood that, in addition to the SAP 1 and the SAP 2, the first device 10 may further include another SAP. Therefore, the first device 10 may further perform a multi-link connection and service transmission with another non-AP MLD, another AP MLD, another type of device, or the like.

The non-AP MLD in this application may be a wireless communication chip, a wireless sensor, or a wireless communication terminal, for example, a user terminal (user terminal), a user apparatus, an access apparatus, a subscriber station (subscriber station), a subscriber unit (subscriber unit), a mobile station (mobile station), a user agent (user agent), or user equipment, that supports a Wi-Fi communication function. This is not limited herein. The user terminal may include various devices having a wireless communication function, for example, a handheld device, a vehicle-mounted device, a wearable device, an internet of things (internet of things, IoT) device, a computing device, another processing device connected to a wireless modem, user equipment (user equipment, UE) in various forms, a mobile station (mobile station, MS), a terminal (terminal), terminal equipment (terminal equipment), a portable communication device, handheld equipment, a portable computing device, an entertainment device, a game device or system, a global positioning system device, or any other suitable device configured to perform network communication through a wireless medium. In addition, the non-AP MLD may support the 802.11be standard or a next-generation WLAN standard of the 802.11be standard. The non-AP MLD may also support a plurality of WLAN standards such as 802.11ax, 802.11ac, 802.11n, 802.11g, 802.11b, and 802.11a.

The AP MLD in this application may an apparatus that provides a wireless communication function for the non-AP LD associated with the AP MLD and that is deployed in a wireless communication network, and is mainly deployed in a home, a building, and a park. A typical coverage radius is tens of meters to 100-odd meters. It is clear that the AP MLD may alternatively be deployed outdoors. The AP MLD is equivalent to a bridge that connects a wired network and a wireless network. The AP MLD is mainly used to connect various wireless network clients together and then connect the wireless network to an ethernet. Specifically, the AP LD may be a communication device with a Wi-Fi chip, such as a base station, a router, a gateway, a repeater, a communication server, a switch, or a bridge. The base station may include a macro base station, a micro base station, a relay station, and the like in various forms. In addition, the AP MLD may support the 802.11 be standard or a next-generation WLAN standard of the 802.11 be standard. The AP MLD may also support WLAN standards such as 802.11ax, 802.11ac, 802.11n, 802.11g, 802.11b, and 802.11a.

In some embodiments, the AP MLD and the non-AP MLD in this application may be collectively referred to as a WLAN device. During specific implementation, the WLAN device may use a composition structure shown in FIG. 2, or include parts shown in FIG. 2.

FIG. 2 is a diagram of a structure of a WLAN device according to an embodiment of this application. In FIG. 2, the WLAN device 1 may be a non-AP MLD or a processor, a chip, or a chip system (which may also be referred to as a system on chip) in the non-AP MLD. Alternatively, the WLAN device 1 may be an AP MLD or a processor, a chip, or a chip system (which may also be referred to as a system on chip) in the AP MLD. The chip system may include a chip, or may include a chip and another discrete component.

As shown in FIG. 2, the WLAN device 1 includes a processor 11 and a transceiver 12. Further, the WLAN device 1 may further include a memory 14. The processor 11, the memory 14, and the transceiver 12 may be connected through a communication line 13.

The processor 11 is a central processing unit (central processing unit, CPU), a general-purpose processor network processor (network processor, NP), a digital signal processor (digital signal processor, DSP), a microprocessor, a microcontroller, a programmable logic device (programmable logic device, PLD), or any combination thereof. Alternatively, the processor 11 may be another apparatus having a processing function, for example, a circuit, a component, or a software module. This is not limited.

The transceiver 12 is configured to communicate with another device or another communication network. The another communication network may be an ethernet, a radio access network (radio access network, RAN), a WLAN, or the like. The transceiver 12 may be a module, a circuit, a transceiver, or any apparatus that can implement communication.

The communication line 13 is configured to transmit information between parts included in the WLAN device 1.

The memory 14 is configured to store a computer program or instructions.

The memory 14 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), a magnetic disk storage medium or another magnetic storage device, or the like. This is not limited.

In addition, the memory 14 may exist independently of the processor 11, or may be integrated with the processor 11. The memory 14 may be configured to store instructions, program code, some data, or the like. The memory 14 may be located inside the WLAN device 1, or may be located outside the WLAN device 1. This is not limited. The processor 11 is configured to execute the instructions stored in the memory 14, to implement a method provided in the following embodiments of this application.

In an example, the processor 11 may include one or more CPUs, for example, a CPU 0 and a CPU 1 in FIG. 2.

In an optional implementation, the WLAN device 1 includes a plurality of processors. For example, in addition to the processor 11 in FIG. 2, the WLAN device may further include a processor 17.

In an optional implementation, the WLAN device 1 further includes an output device 15 and an input device 16. For example, the input device 16 is a device, for example, a keyboard, a mouse, a microphone, or a joystick, and the output device 15 is a device, for example, a display or a speaker (speaker).

It should be understood that the composition structure shown in FIG. 2 does not constitute a limitation on the WLAN device. In addition to the parts shown in FIG. 2, the WLAN device may include more or fewer parts than those shown in the figure, combine some parts, or have different part arrangements.

The following embodiments of this application describe in detail the multi-link concurrent connection method provided in this application with reference to accompanying drawings and application scenarios by using an example in which the structures shown in FIG. 1 and FIG. 2 are used.

FIG. 3 is an interaction flowchart of a multi-link concurrent connection method according to an embodiment of this application. As shown in FIG. 3, the multi-link concurrent connection method provided in this application may include the following steps.

S101: A first device establishes a multi-link connection to a second device via a first link set, where the first link set includes a first link and a second link.

A plurality of affiliated STAs in the first device may establish a multi-link connection to a plurality of affiliated APs in the second device via the first link set.

The first link set may include at least two links. Parameters such as a quantity of links in the first link set, an operating frequency of each link, and an operating frequency band of each link are not limited in this application.

In addition, data of a link in the first link set is transmitted through a first MAC layer SAP of the first device, that is, data of each link in the first link set passes through a MAC interface provided by a same SAP of the first device.

For a specific implementation of the first MAC layer SAP, refer to the foregoing description of the SAP. Details are not described herein again.

In a possible implementation, the first MAC layer SAP may be an existing SAP in the first device, for example, a built-in SAP or an established SAP (for example, a virtual (virtual) SAP) of the first device.

In a possible implementation, the first MAC layer SAP may be a SAP (for example, a virtual SAP) newly established before the first device performs S101.

For example, the first link set may include the first link and the second link. The first link or the second link may include one or more links. The operating frequencies of the first link and the second link are different. The operating frequency bands of the first link and the second link may be the same or different. Both the data of the first link and the data of the second link pass through the first MAC layer SAP of the first device.

It should be understood that, in addition to the first link and the second link, the first link set may further include another link.

One or more affiliated STAs that are in the first device and that correspond to the first link may establish, through the MAC interface provided by the first MAC layer SAP of the first device, a connection to one or more affiliated APs that are in the second device and that correspond to the first link.

One or more affiliated STAs that are in the first device and that correspond to the second link may establish, through the MAC interface provided by the first MAC layer SAP of the first device, a connection to one or more affiliated APs that are in the second device and that correspond to the second link.

Therefore, multi-link establishment of the first device and the second device can be implemented on the first link and the second link.

S102: The first device establishes a multi-link connection to a third device via a second link set, where the second link set includes a third link and a fourth link, and operating frequencies of the third link and the first link are the same, or operating frequencies of the third link, the first link, and the second link are all different.

A plurality of affiliated STAs in the first device may establish a multi-link connection to a plurality of affiliated APs in the third device via the second link set.

The second link set may include at least two links. Parameters such as a quantity of links in the second link set, an operating frequency of each link, and an operating frequency band of each link are not limited in this application.

In addition, parameters such as the quantity of links, the operating frequencies, the operating frequency bands, and affiliated STAs that are in the first device and that correspond to the links, in the first link set may be the same as or different from parameters such as the quantity of links, the operating frequencies, the operating frequency bands, and affiliated STAs that are in the first device and that correspond to the links, in the second link set.

In addition, data of a link in the second link set is transmitted through a second MAC layer SAP of the first device, that is, data of each link in the second link set passes through a MAC interface provided by a same SAP of the first device.

For a specific implementation of the second MAC layer SAP, refer to the foregoing description of the SAP. Details are not described herein again.

In a possible implementation, the second MAC layer SAP may be an existing SAP in the first device, for example, a built-in SAP or an established SAP (for example, a virtual SAP) of the first device.

In a possible implementation, the second MAC layer SAP may be a SAP (for example, a virtual SAP) newly established before the first device performs S102.

In addition, the first MAC layer SAP of the first device is different from the second MAC layer SAP of the first device, that is, the data of the link in the first link set and the data of the link in the second link set pass through MAC interfaces provided by different SAPs in the first device.

For example, the second link set may include the third link and the fourth link. The third link or the fourth link may include one or more links. The operating frequencies of the third link and the fourth link are different. The operating frequency bands of the third link and the fourth link may be the same or different. Both the data of the third link and the data of the fourth link pass through the second MAC layer SAP of the first device.

The operating frequencies of the third link, the fourth link, the first link, and the second link may be the same or different, provided that the first MAC layer SAP that is of the first device and that corresponds to the first link and the second link is different from the second MAC layer SAP that is of the first device and that corresponds to the third link and the fourth link.

In a possible implementation, the operating frequencies of the third link and the first link are the same. Correspondingly, the operating frequencies of the fourth link and the second link may be the same, and/or the operating frequencies of the fourth link, the first link, and the second link may be all different.

In a possible implementation, the operating frequencies of the third link, the first link, and the second link are all different. Correspondingly, the operating frequency of the fourth link and the operating frequency of the first link or the second link may be the same, and/or the operating frequencies of the fourth link, the first link, and the second link may be all different.

It should be understood that, in addition to the third link and the fourth link, the second link set may further include another link.

One or more affiliated STAs that are in the first device and that correspond to the third link may establish, through the MAC interface provided by the second MAC layer SAP of the first device, a connection to one or more affiliated APs that are in the third device and that correspond to the third link.

One or more affiliated STAs that are in the first device and that correspond to the fourth link may establish, through the MAC interface provided by the second MAC layer SAP of the first device, a connection to one or more affiliated APs that are in the third device and that correspond to the fourth link.

Therefore, multi-link establishment of the first device and the third device can be implemented on the third link and the fourth link.

In conclusion, the first device may establish the multi-link connection to the first device and establish the multi-link connection to the second device, thereby implementing a multi-link concurrent connection of the first device, and supporting connection-before-disconnection roaming or multi-network concurrent connection of a plurality of devices.

Therefore, the first device may switch to the multi-link connection to the second device or the third device based on a link indicator or a user configuration, so that the first device can implement a low-latency or zero-interruption roaming scenario.

In addition, the first device may continue to be in both the multi-link connection to the second device and the multi-link connection to the third device based on a link indicator or a user configuration, so that the first device can implement a low-latency or zero-interruption multi-network concurrent connection scenario.

It is assumed that an affiliated STA in the first device includes a STA 1, a STA 2, and a STA 3, where an operating frequency band of the STA 1 is 2.4 GHz, an operating frequency band of the STA 2 is 5 GHz, and an operating frequency band of the STA 3 is 6 GHz.

An affiliated AP in the second device includes an AP 1, an AP 2, and an AP 3, where an operating frequency band of the AP 1 is 2.4 GHz, an operating frequency band of the AP 2 is 5 GHz, and an operating frequency band of the AP 3 is 6 GHz.

An affiliated AP in the third device includes an AP 1, an AP 2, and an AP 3, where an operating frequency band of the AP 1 is 2.4 GHz, an operating frequency band of the AP 2 is 5 GHz, and an operating frequency band of the AP 3 is 6 GHz.

The first device may establish a multi-link connection to the second device on the link 1, the link 2, and the link 3, and the first device may establish a multi-link connection to the third device on the link 1, the link 2, and the link 3.

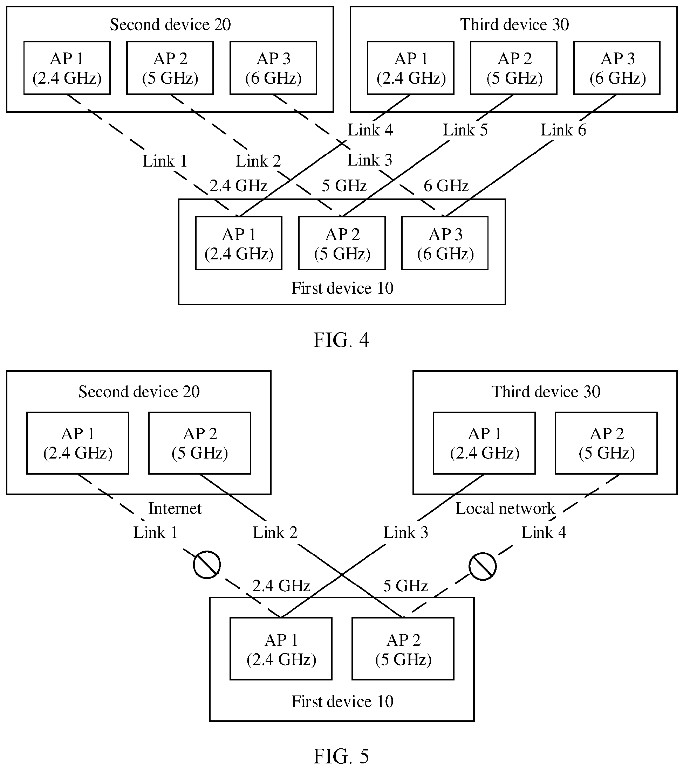

As shown in FIG. 4, the first device may switch from both a multi-link connection to the second device and a multi-link connection to the second device to a multi-link connection to the third device. For example, the first device and the second device may perform service transmission on a link 1 corresponding to 2.4 GHz, a link 2 corresponding to 5 GHz, and a link 3 corresponding to 6 GHz, and the first device and the third device may perform service transmission on a link 4 corresponding to 2.4 GHz, a link 5 corresponding to 5 GHz, and a link 6 corresponding to 6 GHz. Therefore, a low-latency or zero-interruption roaming scenario can be implemented.

For ease of description, descriptions are provided by using an example in which an affiliated STA in the first device includes a STA 1 and a STA 2, an affiliated AP in the second device includes an AP 1 and an AP 2, and an affiliated AP in the third device includes an AP 1 and an AP 2, in FIG. 5.

As shown in FIG. 5, the first device may be in both a multi-link connection to the second device and a multi-link connection to the second device. For example, the first device and the second device may be located on an internet, for example, the first device and the second device may perform service transmission on a link 2 corresponding to 5 GHz, and the first device and the second device may stop service transmission on a link 1 corresponding to 2.4 GHz. In addition, the first device and the third device may be located on a local network, the first device and the third device may perform service transmission on a link 3 corresponding to 2.4 GHz, and the first device and the third device may stop service transmission on a link 4 corresponding to 5 GHz. Therefore, a multi-network concurrent connection scenario can be implemented.

According to the multi-link concurrent connection method provided in this application, the first device may establish the multi-link connection to the third device through a plurality of media access control layer service access points without disconnecting the multi-link connection from the second device, thereby implementing multi-link concurrent connections between the first device and the second device and between the first device and the third device. This can support connection-before-disconnection roaming, reduces an interruption time of service transmission, implements a low-latency or zero-interruption roaming scenario, resolves a problem that an MLO function is incompatible with a low-latency or zero-interruption roaming function, can support the multi-network concurrent connection of a plurality of devices, implements a low-latency or zero-interruption multi-network concurrent connection scenario, resolves a problem that the MLO function is incompatible with a low-latency or zero-interruption multi-network concurrent connection function, further supports functions such as seamless roaming or a multi-network concurrent connection, has advantages such as a high throughput and good network flexibility, and can implement multi-band and multi-link efficient resource management, channel access, coordinated transmission, and the like.

Based on the descriptions of the foregoing embodiment, before the first device establishes the multi-link connection to the third device via the second link set in S102, the first device may determine, based on a link indicator or a user configuration, whether to enable a multi-link concurrent connection function.

In a possible implementation, when the first device moves, the first device may move to an edge of a signal coverage area of the second device and enter a signal coverage area of the third device, resulting in deterioration of channel quality of the link in the first link set. It can be learned that the first device needs to switch from both the multi-link connection to the second device and the multi-link connection to the third device to the multi-link connection to the third device.

Therefore, when it is detected that channel quality of one or more links in the first link set deteriorates, the first device may determine to enable the multi-link concurrent connection function.

When a received signal strength indicator (received signal strength indicator, RSSI) of a link is less than a first threshold, it indicates that channel quality of the link deteriorates, and/or when a throughput of a link is less than a second threshold, it indicates that channel quality of the link deteriorates.

Specific values of the first threshold and the second threshold are not limited in this application. The first threshold or the second threshold may be set based on parameters such as a service requirement and a network status.

In a possible implementation, the first device may determine, based on a user requirement, that the first device needs to be in a multi-network concurrent connection to the second device and the third device.

Therefore, when receiving a user instruction instructing to enable the multi-link concurrent connection function, the first device may determine to enable the multi-link concurrent connection function.

The user instruction may be an instruction generated through triggering of a user on a hardware button of the first device or another device communicatively connected to the first device, or may be an instruction generated through triggering of a user on a software control of the first device or another device communicatively connected to the first device. This is not limited in this application.

In addition, when enabling the multi-link concurrent connection function, the first device may display an icon, where the icon indicates that the multi-link concurrent connection function is enabled. Parameters such as a shape, a size, a color, a location, and a pattern of the icon are not limited in this application.

Based on the descriptions of the foregoing embodiment, because a quantity of affiliated STAs in the first device is greater than or equal to 2, an affiliated STA that is in the first device and that corresponds to a link in the first link set may be the same as or different from an affiliated STA that is in the first device and that corresponds to a link in the second link set. Based on this, the first device may implement the multi-link concurrent connection to the second device and the third device in a plurality of implementations, to support the connection-before-disconnection roaming or the multi-network concurrent connection of the plurality of devices.

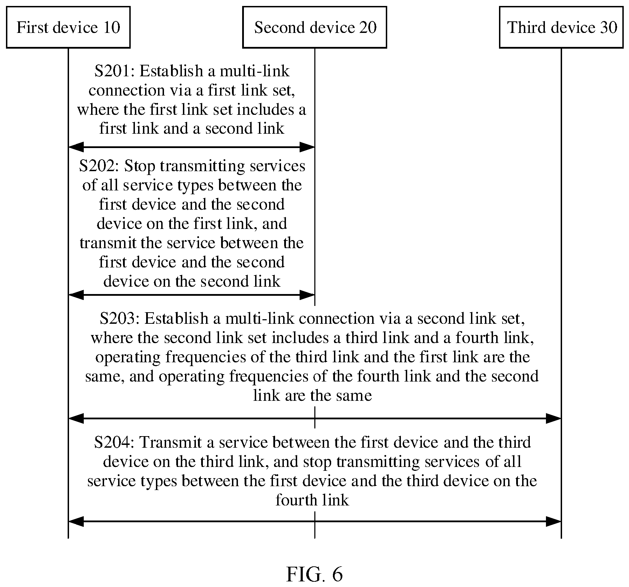

Based on the embodiment shown in FIG. 3 to FIG. 5 and with reference to FIG. 6 to FIG. 9, the following describes in detail a plurality of implementations in which a first device separately implements concurrent multi-link connections to a second device and a third device.

FIG. 6 is an interaction flowchart of a multi-link concurrent connection method according to an embodiment of this application. As shown in FIG. 6, the multi-link concurrent connection method provided in this application may include the following steps.

S201: A first device establishes a multi-link connection to a second device via a first link set, where the first link set includes a first link and a second link.

An implementation of S201 is similar to the implementation of S101 in the embodiment shown in FIG. 3. Details are not described herein again in this application.

S202: The first device and the second device stop transmitting services of all service types between the first device and the second device to each other on the first link, and transmit the service between the first device and the second device to each other on the second link.

S203: The first device establishes a multi-link connection to a third device via a second link set, where the second link set includes a third link and a fourth link, operating frequencies of the third link and the first link are the same, and operating frequencies of the fourth link and the second link are the same.

An implementation of S203 is similar to the implementation of S102 in the embodiment shown in FIG. 3. Details are not described herein again in this application.

When the operating frequencies of the third link and the first link are the same, and the operating frequencies of the fourth link and the second link are the same, service transmission cannot be performed on both the third link and the first link, and service transmission cannot be performed on both the fourth link and the second link. Otherwise, a service transmission conflict is caused.

In a possible implementation, the first device may disable the first link and enable the second link, with the second device. In addition, the first device may enable the third link and disable the fourth link, with the third device.

In a possible implementation, the first device may enable the first link and disable the second link, with the second device. In addition, the first device may disable the third link and enable the fourth link, with the third device.

Disabling any link mentioned in this application may be understood as disabling a channel corresponding to an operating frequency of the link, to be specific, an affiliated STA and an affiliated AP that correspond to the link are still connected (that is, not disconnected), but the affiliated STA and the affiliated AP that correspond to the link cannot transmit a service to each other on the link or the channel.

Enabling any link mentioned in this application may be understood as enabling a channel corresponding to an operating frequency of the link, to be specific, an affiliated STA and an affiliated AP that correspond to the link can transmit a service to each other on the link or the channel.

It should be understood that, in addition to the foregoing implementation, the operating frequencies of the third link and the second link may be the same, and the operating frequencies of the fourth link and the first link may be the same. To be specific, the first link is disabled, the second link is enabled, the third link is disabled, and the fourth link is enabled; or the first link is enabled, the second link is disabled, the third link is enabled, and the fourth link is disabled.

In addition, the first device may usually disable a link whose channel quality deteriorates in the first link set. When the first link is disabled, it indicates that channel quality of the first link deteriorates. When the second link is disabled, it indicates that channel quality of the second link deteriorates.

Operating principles of the foregoing implementations are the same or similar. For ease of explanation, descriptions are provided by using an example in which the first link is disabled, the second link is enabled, the third link is enabled, and the fourth link is disabled.

An affiliated STA that is in the first device and that corresponds to the first link and an affiliated AP that is in the second device and that corresponds to the first link can stop transmitting the services of all service types between the first device and the second device to each other. Therefore, an affiliated STA in the first device may determine that the affiliated STA and an affiliated AP in the third device can transmit a service to each other on a channel corresponding to the operating frequency of the first link, thereby providing a possibility for service transmission between the first device and the third device.

The affiliated STA in the first device may be the affiliated STA that is in the first device and that corresponds to the first link, or may be another affiliated STA that is in the first device and that can transmit a service on the channel corresponding to the operating frequency of the first link. This is not limited in this application.

An affiliated STA that is in the first device and that corresponds to the second link and an affiliated AP that is in the second device and that corresponds to the second link can transmit the service between the first device and the second device to each other. Therefore, an affiliated STA in the first device and an affiliated AP in the second device can transmit a service to each other on a channel corresponding to the operating frequency of the second link, and the first device can determine to stop transmitting a service with an affiliated AP in the third device on the channel corresponding to the operating frequency of the second link.

The service transmitted between the first device and the second device may include one or more service types. A service type and a quantity of services are not limited in this application.

Therefore, the multi-link connection between the first device and the second device can be implemented on the second link.

S204: The first device and the third device transmit a service between the first device and the third device to each other on the third link, and stop transmitting services of all service types between the first device and the third device on the fourth link.

An affiliated STA that is in the first device and that corresponds to the third link and an affiliated AP that is in the third device and that corresponds to the third link can transmit a service between the first device and the third device to each other. Therefore, an affiliated STA in the first device and an affiliated AP in the third device can transmit a service to each other on a channel corresponding to the operating frequency of the third link.

An affiliated STA that is in the first device and that corresponds to the fourth link and an affiliated AP that is in the third device and that corresponds to the fourth link can stop transmitting the services of all service types between the first device and the third device to each other. Therefore, an affiliated STA in the first device does not simultaneously transmit services with an affiliated AP in the second device and an affiliated AP in the third device on a channel corresponding to the operating frequency of the second link or the fourth link.

The affiliated STA that is in the first device and that corresponds to the fourth link may be the affiliated STA that is in the first device and that corresponds to the second link, or may be another affiliated STA that is in the first device and that can transmit a service on the channel corresponding to the operating frequency of the fourth link. This is not limited in this application.

The service transmitted between the first device and the third device may include one or more service types. A service type and a quantity of services are not limited in this application.

Therefore, the multi-link connection between the first device and the third device can be implemented on the third link.

In conclusion, possibilities are respectively provided for the service transmission between the first device and the second device and the service transmission between the first device and the third device by disabling some links. This implements the multi-link connection between the first device and the second device and the multi-link connection between the first device and the third device, and ensures that the service transmission between the first device and the second device does not conflict with the service transmission between the first device and the third device on a channel of a same operating frequency.

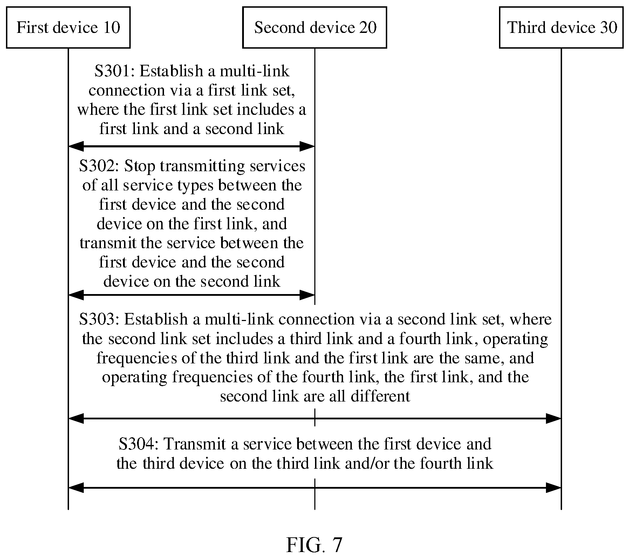

FIG. 7 is an interaction flowchart of a multi-link concurrent connection method according to an embodiment of this application. As shown in FIG. 7, the multi-link concurrent connection method provided in this application may include the following steps.

S301: A first device establishes a multi-link connection to a second device via a first link set, where the first link set includes a first link and a second link.

An implementation of S301 is similar to the implementation of S101 in the embodiment shown in FIG. 3. Details are not described herein again in this application.

S302: The first device and the second device stop transmitting services of all service types between the first device and the second device to each other on the first link, and transmit the service between the first device and the second device to each other on the second link.

S303: The first device establishes a multi-link connection to a third device via a second link set, where the second link set includes a third link and a fourth link, operating frequencies of the third link and the first link are the same, and operating frequencies of the fourth link, the first link, and the second link are all different.

An implementation of S303 is similar to the implementation of S102 in the embodiment shown in FIG. 3. Details are not described herein again in this application.

When the operating frequencies of the third link and the first link are the same, and the operating frequencies of the fourth link, the first link, and the second link are all different, service transmission cannot be performed on both the third link and the first link. Otherwise, a service transmission conflict is caused. Service transmission can be performed on the fourth link.

In a possible implementation, the first device may disable the first link and enable the second link, with the second device. In addition, the first device may enable the third link and enable the fourth link, with the third device.

It should be understood that, in addition to the foregoing implementation, the operating frequencies of the third link and the second link may be the same, and the operating frequencies of the fourth link, the first link, and the second link are all different, to be specific, the first link is enabled, the second link is disabled, the third link is enabled, and the fourth link is enabled. Alternatively, the operating frequencies of the fourth link and the first link may be the same, and the operating frequencies of the third link, the first link, and the second link are all different, to be specific, the first link is disabled, the second link is enabled, the third link is enabled, and the fourth link is enabled. Alternatively, the operating frequencies of the fourth link and the second link may be the same, and the operating frequencies of the third link, the first link, and the second link are all different, to be specific, the first link is enabled, the second link is disabled, the third link is enabled, and the fourth link is enabled.

In addition, the first device may usually disable a link whose channel quality deteriorates in the first link set. When the first link is disabled, it indicates that channel quality of the first link deteriorates. When the second link is disabled, it indicates that channel quality of the second link deteriorates.

Alternatively, the first device may randomly disable one or more links in the first link set based on a user configuration.

Operating principles of the foregoing implementations are the same or similar. For ease of explanation, descriptions are provided by using an example in which the first link is disabled, the second link is enabled, the third link is enabled, and the fourth link is enabled.

For that the first device and the second device stop transmitting the services of all service types between the first device and the second device to each other on the first link, refer to related descriptions in the embodiment of S202. Details are not described herein again.

An affiliated STA that is in the first device and that corresponds to the second link and an affiliated AP that is in the second device and that corresponds to the second link can transmit the service between the first device and the second device to each other. Therefore, an affiliated STA in the first device and an affiliated AP in the second device can transmit a service to each other on a channel corresponding to the operating frequency of the second link.

Therefore, the multi-link connection between the first device and the second device can be implemented on the second link.

S304: The first device and the third device transmit a service between the first device and the third device to each other on the third link and/or the fourth link.

For that the first device and the third device transmit the service between the first device and the third device to each other on the third link in S304, refer to related descriptions in the embodiment of S204. Details are not described herein again.

The operating frequencies of the fourth link, the first link, and the second link are all different. Therefore, no service transmission conflict occurs on channels corresponding to the operating frequencies of the fourth link, the first link, and the second link. In this way, an affiliated STA that is in the first device and that corresponds to the fourth link and an affiliated AP that is in the third device and that corresponds to the fourth link can transmit a service between the first device and the third device to each other. Therefore, an affiliated STA in the first device and an affiliated AP in the third device can transmit a service to each other on the channel corresponding to the operating frequency of the fourth link.

The affiliated STA that is in the first device and that corresponds to the fourth link may be an affiliated STA that is in the first device and that can transmit a service on the channel corresponding to the operating frequency of the fourth link. The affiliated STA that is in the first device and that corresponds to the fourth link is different from an affiliated STA corresponding to the first link, the affiliated STA corresponding to the second link, and an affiliated STA corresponding to the third link that are in the first device.

Therefore, the multi-link connection between the first device and the third device can be implemented on the third link and/or the fourth link based on factors such as a network status, a service requirement, or a device status.

In conclusion, possibilities are respectively provided for service transmission between the first device and the second device and service transmission between the first device and the third device by disabling some links. This implements the multi-link connection between the first device and the second device and the multi-link connection between the first device and the third device, and ensures that the service transmission between the first device and the second device does not conflict with the service transmission between the first device and the third device on a channel of a same operating frequency.

In addition, a similarity between the embodiments shown in FIG. 6 and FIG. 7 lies in that the first device reuses an affiliated STA that performs service transmission with an affiliated AP in the second device, to perform service transmission with an affiliated AP in the third device. A case in which the first device has fewer affiliated STAs is fully considered. This reduces resource consumption caused by using a new affiliated STA. A difference between the embodiments shown in FIG. 6 and FIG. 7 lies in that in FIG. 6, all affiliated STAs in the first device are reused, but in FIG. 7, some affiliated STAs in the first device are reused and a new affiliated STA is introduced.

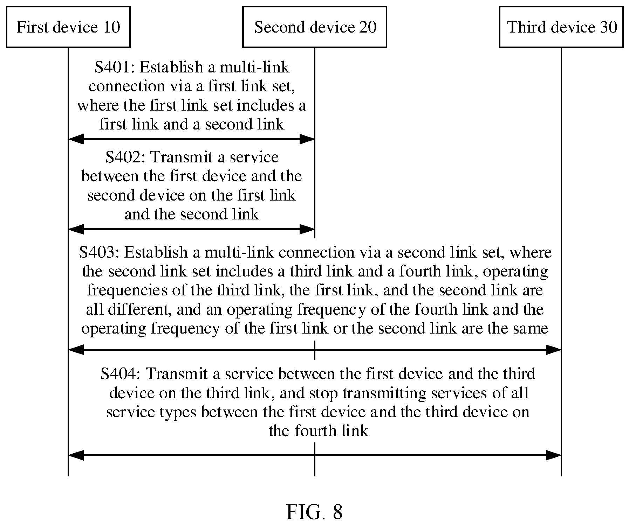

FIG. 8 is an interaction flowchart of a multi-link concurrent connection method according to an embodiment of this application. As shown in FIG. 8, the multi-link concurrent connection method provided in this application may include the following steps.

S401: A first device establishes a multi-link connection to a second device via a first link set, where the first link set includes a first link and a second link.

An implementation of S401 is similar to the implementation of S101 in the embodiment shown in FIG. 3. Details are not described herein again in this application.

S402: The first device and the second device transmit a service between the first device and the second device to each other on the first link and the second link.

S403: The first device establishes a multi-link connection to a third device via a second link set, where the second link set includes a third link and a fourth link, operating frequencies of the third link, the first link, and the second link are all different, and an operating frequency of the fourth link and the operating frequency of the first link or the second link are the same.

An implementation of S403 is similar to the implementation of S102 in the embodiment shown in FIG. 3. Details are not described herein again in this application.

When the operating frequencies of the third link, the first link, and the second link are all different, and the operating frequency of the fourth link and the operating frequency of the first link or the second link are the same, service transmission can be performed on the third link. Service transmission cannot be performed on both the fourth link and the first link or the second link. Otherwise, a service transmission conflict is caused.

In a possible implementation, the first device may enable the first link and enable the second link, with the second device. In addition, the first device may enable the third link and disable the fourth link, with the third device.

It should be understood that, in addition to the foregoing implementation, the operating frequency of the third link and the operating frequency of the first link or the second link may be the same, and the operating frequencies of the fourth link, the first link, and the second link are all different, to be specific, the first link is enabled, the second link is enabled, the third link is disabled, and the fourth link is enabled.

Operating principles of the foregoing implementations are the same or similar. For ease of explanation, descriptions are provided by using an example in which the first link is enabled, the second link is enabled, the third link is enabled, and the fourth link is disabled.

For that the first device and the second device transmit the service between the first device and the second device to each other on the first link and the second link, refer to the description about that the first device and the second device transmit the service between the first device and the second device to each other on the second link in the embodiment of S202. Details are not described herein again.

Therefore, the multi-link connection between the first device and the second device can be implemented on the first link and the second link.

S404: The first device and the third device transmit a service between the first device and the third device to each other on the third link, and stop transmitting services of all service types between the first device and the third device on the fourth link.

The operating frequencies of the third link, the first link, and the second link are all different. Therefore, no service transmission conflict occurs on channels corresponding to the operating frequencies of the third link, the first link, and the second link. In this way, an affiliated STA that is in the first device and that corresponds to the third link and an affiliated AP that is in the third device and that corresponds to the third link can transmit a service between the first device and the third device to each other. Therefore, an affiliated STA in the first device and an affiliated AP in the third device can transmit a service to each other on the channel corresponding to the operating frequency of the third link.

The affiliated STA that is in the first device and that corresponds to the third link may be an affiliated STA that is in the first device and that can transmit a service on the channel corresponding to the operating frequency of the third link. The affiliated STA that is in the first device and that corresponds to the third link is different from an affiliated STA corresponding to the first link, an affiliated STA corresponding to the second link, and an affiliated STA corresponding to the fourth link that are in the first device.

The affiliated STA that is in the first device and that corresponds to the fourth link and an affiliated AP that is in the third device and that corresponds to the fourth link can stop transmitting the services of all service types between the first device and the third device to each other. Therefore, an affiliated STA in the first device does not separately transmit a service with both an affiliated AP in the second device and an affiliated AP in the third device on the channel corresponding to the operating frequency of the second link, and an affiliated STA in the first device does not separately transmit a service with both an affiliated AP in the second device and an affiliated AP in the third device on the channel corresponding to the operating frequency of the third link.

The affiliated STA that is in the first device and that corresponds to the fourth link may be the affiliated STA that is in the first device and that corresponds to the first link, may be the affiliated STA that is in the first device and that corresponds to the second link, or may be another affiliated STA that is in the first device and that can transmit a service on a channel corresponding to the operating frequency of the fourth link. This is not limited in this application.

Therefore, the multi-link connection between the first device and the third device can be implemented on the third link.

In conclusion, possibilities are respectively provided for service transmission between the first device and the second device and service transmission between the first device and the third device via any one of an affiliated STA that is in the first device and that does not perform service transmission with the second device, an operating frequency different from those of all links in the first link set, or a channel corresponding to the operating frequency different from those of all the links in the first link set. This implements the multi-link connection between the first device and the second device and the multi-link connection between the first device and the third device, and ensures that the service transmission between the first device and the second device does not conflict with the service transmission between the first device and the third device on a channel of a same operating frequency.

In addition, a similarity between the embodiment shown in FIG. 8 and the embodiments shown in FIG. 6 and FIG. 7 lies in that a conflict on a channel of a same operating frequency is avoided during service transmission between the first device and the second device and service transmission between the first device and the third device. A difference between the embodiment shown in FIG. 8 and the embodiments shown in FIG. 6 and FIG. 7 lies in that the first device uses different technical means.

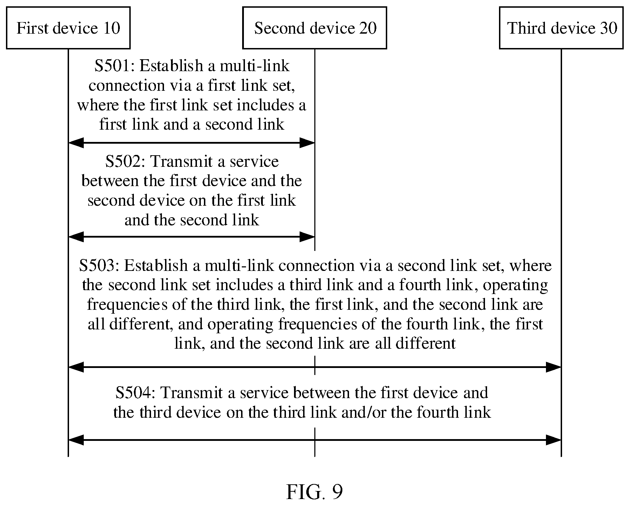

FIG. 9 is an interaction flowchart of a multi-link concurrent connection method according to an embodiment of this application. As shown in FIG. 9, the multi-link concurrent connection method provided in this application may include the following steps.

S501: A first device establishes a multi-link connection to a second device via a first link set, where the first link set includes a first link and a second link.

An implementation of S501 is similar to the implementation of S101 in the embodiment shown in FIG. 3. Details are not described herein again in this application.

S502: The first device and the second device transmit a service between the first device and the second device to each other on the first link and the second link.

S503: The first device establishes a multi-link connection to a third device via a second link set, where the second link set includes a third link and a fourth link, operating frequencies of the third link, the first link, and the second link are all different, and operating frequencies of the fourth link, the first link, and the second link are all different.

An implementation of S503 is similar to the implementation of S102 in the embodiment shown in FIG. 3. Details are not described herein again in this application.

When the operating frequencies of the third link, the first link, and the second link are all different, and the operating frequencies of the fourth link, the first link, and the second link are all different, service transmission can be performed on the third link. Service transmission can be performed on the fourth link.

In a possible implementation, the first device may enable the first link and enable the second link, with the second device. In addition, the first device may enable the third link and enable the fourth link, with the third device.

For that the first device and the second device transmit the service between the first device and the second device to each other on the first link and the second link, refer to the description about that the first device and the second device transmit the service between the first device and the second device to each other on the second link in the embodiment of S202. Details are not described herein again.

Therefore, the multi-link connection between the first device and the second device can be implemented on the first link and the second link.

It should be understood that S502 and S503 are not subject to a time sequence, and S502 and S503 may be simultaneously performed, or may be sequentially performed.

S504: The first device and the third device transmit a service between the first device and the third device to each other on the third link and/or the fourth link.

For that the first device and the third device transmit the service between the first device and the third device to each other on the third link and/or and the fourth link in S504, refer to related descriptions in the embodiment of S304. Details are not described herein again.

Therefore, the multi-link connection between the first device and the third device can be implemented on the third link and/or the fourth link based on factors such as a network status, a service requirement, or a device status.

In conclusion, possibilities are respectively provided for service transmission between the first device and the second device and service transmission between the first device and the third device via any one of an affiliated STA that is in the first device and that does not perform service transmission with the second device, an operating frequency different from those of all links in the first link set, or a channel corresponding to the operating frequency different from those of all the links in the first link set. This implements the multi-link connection between the first device and the second device and the multi-link connection between the first device and the third device, and ensures that the service transmission between the first device and the second device does not conflict with the service transmission between the first device and the third device on a channel of a same operating frequency.

In addition, a similarity between the embodiments shown in FIG. 8 and FIG. 9 lies in that an affiliated STA that is in the first device and that performs service transmission with an affiliated AP in the second device is different from an affiliated STA that is in the first device and that performs service transmission with an affiliated AP in the third device, and an affiliated STA in the first device can be fully used. A difference between the embodiments in FIG. 8 and FIG. 9 lies in that affiliated STAs in the foregoing first device in FIG. 8 are partially different, and may be reused, but all affiliated STAs in the foregoing first device in FIG. 9 are different.

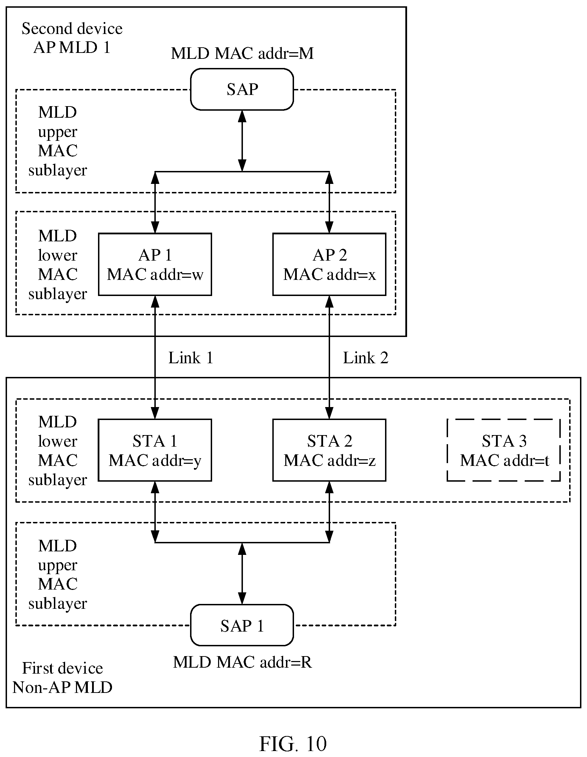

Based on the descriptions of the embodiments in FIG. 6 to FIG. 9 and with reference to FIG. 10 to FIG. 14, the following describes in detail specific implementation processes in which a first device performs a connection and service transmission with a third device by disabling some links and via an affiliated STA that is in the first device and that does not perform service transmission with a second device.

FIG. 10 to FIG. 14 each are an interaction diagram of a plurality of devices according to an embodiment of this application.

It is assumed that one SAP included in the first device is a SAP 1, and an MLD MAC address that is of the first device and that corresponds to the SAP 1 is R. Optionally, another SAP included in the first device is a SAP 2, and an MLD MAC address that is of the first device and that corresponds to the SAP 2 is S. An affiliated STA in the first device includes a STA 1, a STA 2, and a STA 3. A MAC address (MAC address) of the STA 1 is y, a MAC address of the STA 2 is z, and a MAC address of the STA 3 is t, where y, z, and t are different.

An MLD MAC address that is of the second device and that corresponds to one SAP included in the second device is M. An affiliated AP in the first device includes an AP 1 and an AP 2. A MAC address of the AP 1 is w, and a MAC address of the AP 2 is x, where w and x are different.

An MLD MAC address that is of the third device and that corresponds to one SAP included in the third device is N. An affiliated AP in the first device includes an AP 3 and an AP 4. A MAC address of the AP 3 is p, and a MAC address of the AP 4 is q, where p and q are different.

For ease of description, in FIG. 10, a MAC address is MAC addr, and a link is a link.

As shown in FIG. 10, the STA 1 establishes a connection to the AP 1 on a link 1 through the SAP 1, and the STA 2 establishes a connection to the AP 2 on a link 2 through the SAP 1. The STA 3 does not establish a connection to an affiliated AP in the second device through the SAP 1.

It can be learned that the first device establishes a multi-link connection to the second device on the link 1 and the link 2.

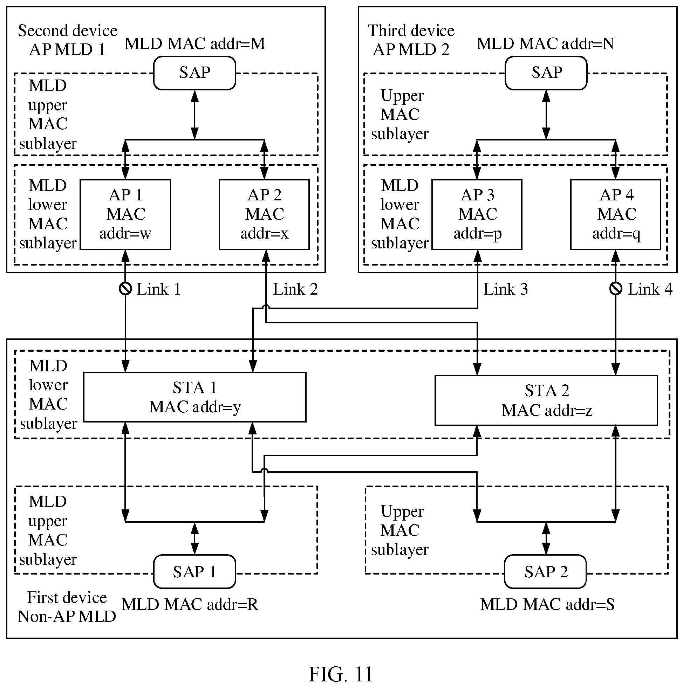

When determining to enable a multi-link concurrent connection function, the first device may disable the link 1. A specific procedure is as follows:
As shown in FIG. 11, the STA 1 stops transmitting a service with the AP 1 on the link 1 through the SAP 1. After the link 1 is disabled, the STA 1 establishes a connection to the AP 3 on a link 3 through the SAP 2, the STA 2 establishes a connection to the AP 4 on a link 4 through the SAP 2, and the STA 2 stops transmitting a service with the AP 4 on the link 4 through the SAP 2.

It can be learned that the first device establishes a multi-link connection to the third device on the link 3 and the link 4.

In conclusion, the first device may be in both a multi-link connection to the second device and a multi-link connection to the third device, thereby implementing the multi-link concurrent connection function of the first device.

In addition, the first device and the second device can transmit a service to each other on the link 2, and the first device and the third device can transmit a service to each other on the link 3, to implement a low-latency or zero-interruption multi-network concurrent connection scenario.

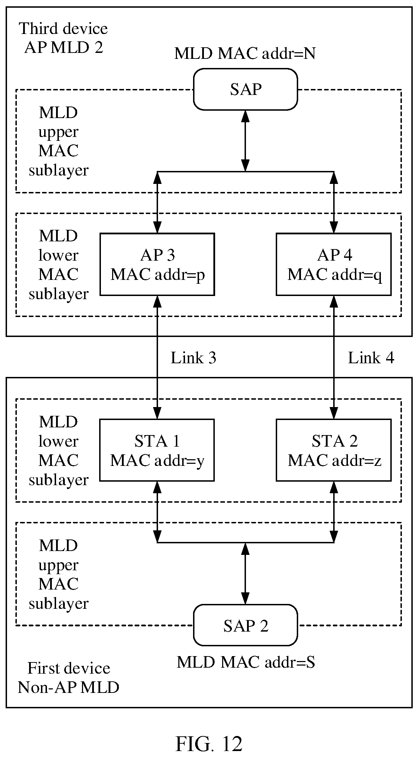

As shown in FIG. 12, the STA 1 is disconnected from the AP 1 on the link 1 through the SAP 1, and the STA 2 is disconnected from the AP 2 on the link 2 through the SAP 1. After the link 1 and the link 2 are disconnected, the STA 2 starts service transmission with the AP 4 on the link 2 through the SAP 2.

In conclusion, the first device switches from both the multi-link connection to the second device and the multi-link connection to the third device to the multi-link connection to the third device, to support connection-before-disconnection roaming, thereby implementing a low-latency or zero-interruption roaming scenario.

It should be understood that the foregoing process is merely an example.

When determining to enable a multi-link concurrent connection function, the first device may use the STA 3. A specific procedure is as follows:

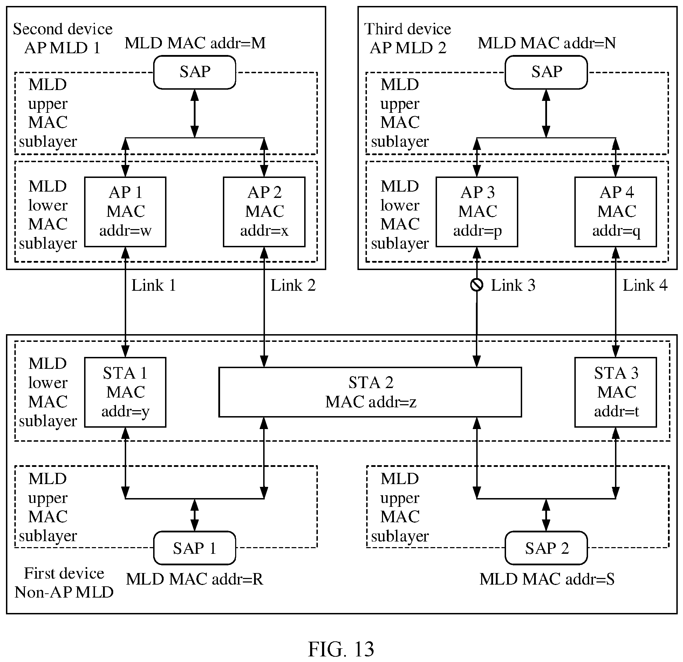

As shown in FIG. 13, the STA 3 establishes a connection to the AP 4 on a link 4 through the SAP 2, the STA 2 establishes a connection to the AP 3 on a link 3 through the SAP 2, and the STA 2 stops transmitting a service with the AP 3 on the link 3 through the SAP 2.

It can be learned that the first device establishes a multi-link connection to the third device on the link 3 and the link 4.

In conclusion, the first device may be in both a multi-link connection to the second device and a multi-link connection to the third device, thereby implementing the multi-link concurrent connection function of the first device.

In addition, the first device and the second device can transmit a service to each other on the link 1 and the link 2, and the first device and the third device can transmit a service to each other on the link 4, to implement a low-latency or zero-interruption multi-network concurrent connection scenario.

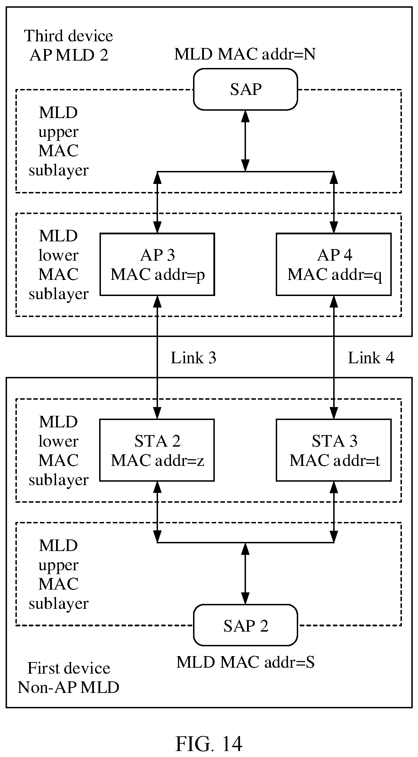

As shown in FIG. 14, the STA 1 is disconnected from the AP 1 on the link 1 through the SAP 1, and the STA 2 is disconnected from the AP 2 on the link 2 through the SAP 1. After the link 1 and the link 2 are disconnected, the STA 2 starts service transmission with the AP 3 on the link 3 through the SAP 2.

In conclusion, the first device switches from both the multi-link connection to the second device and the multi-link connection to the third device to the multi-link connection to the third device, to support connection-before-disconnection roaming, thereby implementing a low-latency or zero-interruption roaming scenario.

It should be understood that the foregoing process is merely an example.

Based on the descriptions of the embodiments shown in FIG. 4 and FIG. 5, before the first device and the second device stop transmitting the services of all service types between the first device and the second device to each other on the first link in S202 or S302, the first device may need to disable the first link with the second device.

Disabling the first link may indicate that channel quality of the first link deteriorates.

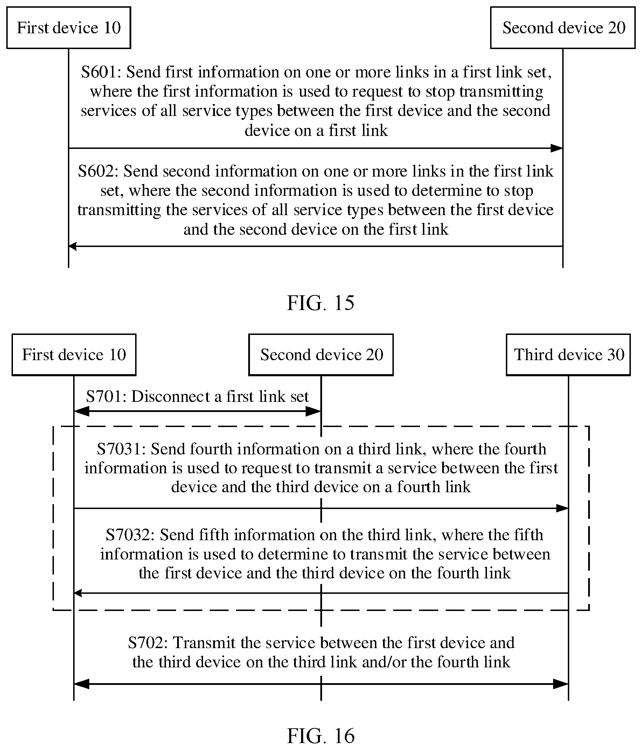

With reference to FIG. 15, the following describes in detail a specific implementation in which a first device disables a first link with a second device.

FIG. 15 is an interaction flowchart of a multi-link concurrent connection method according to an embodiment of this application. As shown in FIG. 15, the multi-link concurrent connection method provided in this application may include the following steps.

S601: The first device sends first information to the second device on one or more links in a first link set, where the first information is used to request to stop transmitting services of all service types between the first device and the second device on the first link.

The first device may select one or more links from the first link set, for example, the first link, a second link, another link in the first link set, some links in the first link set, or all links in the first link set.

Therefore, an affiliated STA that is in the first device and that corresponds to the selected link can send the first information to an affiliated AP that is in the second device and that corresponds to the selected link.

S602: The second device sends second information to the first device on one or more links in the first link set, where the second information is used to determine to stop transmitting the services of all service types between the first device and the second device on the first link.

The second device may determine, based on the first information, whether to disable the first link.

After determining to disable the first link, the second device may select one or more links from the first link set, for example, the first link, the second link, another link in the first link set, some links in the first link set, or all links in the first link set.

Therefore, the affiliated AP that is in the second device and that corresponds to the selected link may send the second information to the affiliated STA that is in the first device and that corresponds to the selected link, so that the first device can learn, based on the second information, that the second device agrees to disable the first link.

Therefore, the first device and the second device can stop transmitting the services of all service types between the first device and the second device to each other on the first link.

Specific implementations of the first information and the second information are not limited in this application.

In a possible implementation, the first information may be carried in a first frame, and the second information may be carried in a second frame. The first frame or the second frame may be one or more frames. The first frame or the second frame may use an existing frame structure in the 802.11 series standards, for example, a beacon frame, a probe request frame, an association request frame, a reassociation request frame, an authentication frame, or a frame in another format in a management frame, or may use a newly generated frame structure in the 802.11 series standards. This is not limited in this application.

In addition, the first frame may further carry third information, and the third information indicates, to the second device, whether to stop transmitting the services of all service types between the first device and the second device on the first link.

A specific implementation of the third information is not limited in this application. In addition, the first information and the third information may be indicated by a same element or field or different elements or fields in the first frame.

For example, the first frame is a traffic identifier-to-link mapping request frame (TID-to-link mapping request frame), and correspondingly, the second frame is a traffic identifier-to-link mapping response frame (TID-to-link mapping response frame).

It should be understood that the second device may support a traffic identifier-to-link mapping (TID-to-link mapping) negotiation function.

For example, a traffic identifier-to-link mapping element (TID-to-link mapping element) in the traffic identifier-to-link mapping request frame may include a traffic identifier-to-link mapping control (TID-to-link mapping control) field and a link mapping of traffic identifier n (link mapping of TID n) field, or a traffic identifier-to-link mapping control field and an extended link mapping of traffic identifier n field.

Herein, n is an integer, and a value of n is greater than or equal to 0 and less than or equal to 7.

A link mapping presence indicator (link mapping presence indicator) subfield in the traffic identifier-to-link mapping control field is used to configure a service type of a service allowed to be transmitted.

The link mapping of traffic identifier n field or the extended link mapping of traffic identifier n field is used to configure a service type of a service allowed to be transmitted on each link in the first link set, that is, request to disable an m^{th} link, where m is a number of the first link, and m is an integer.

It is considered that in the 802.11 series standards, a length of the link mapping of traffic identifier n field is 16 bits, that is, traffic identifier-to-link mapping (TID-to-link mapping) of 16 links can be supported. Based on this, the first device may use the link mapping of traffic identifier n field or the extended link mapping of traffic identifier n field to indicate the first link.

The extended link mapping of traffic identifier n field may support traffic identifier-to-link mapping of more than 16 links.

If a quantity of links between the first device and the second device is greater than 16, the first device may use the extended link mapping of traffic identifier n field to indicate the first link.

If a quantity of links between the first device and the second device is less than or equal to 16, the first device may use the link mapping of traffic identifier n field or the extended link mapping of traffic identifier n field to indicate the first link.

Therefore, the first device may perform configuration, based on the traffic identifier-to-link mapping request frame, to stop transmitting the services of all service types between the first device and the second device on the first link, to indicate to disable the first link.

In addition, in some embodiments, when status code (status code) in the traffic identifier-to-link mapping response frame is 0, it may indicate that the second device agrees to disable the first link.

In addition, due to a difference between the 802.11 series standards, in some standards, the second device may choose to agree to disable the first link, or may choose not to agree to disable the first link. However, in this application, the second device needs to agree to disable the first link. Therefore, in some embodiments, one or more bits in a reserved (reserved) subfield in the traffic identifier-to-link mapping control field may be configured to indicate, to the second device, whether to stop transmitting the services of all service types between the first device and the second device on the first link.

The one or more bits in the reserved subfield may be a disabled flag (disabled flag) subfield, or may have another name. This is not limited in this application. When the disabled flag subfield is set to 1, it indicates that the second device needs to agree to the request of the first device. When the disabled flag subfield is set to 0, it indicates that the second device may independently determine whether to agree to the request of the first device.

Therefore, the first device may indicate, based on the third information, whether the second device chooses to disable the first link or needs to disable the first link, to be specific, the second device may choose whether to agree to the request of the first device for disabling the first link, or the second device may need to agree to the request of the first device for disabling the first link.

In conclusion, the first device can disable the first link with the second device.

Based on the descriptions of the embodiments shown in FIG. 4 to FIG. 7, the first device can separately implement a multi-link connection to the second device and a multi-link connection to a third device, to support multi-network concurrent connection of a plurality of devices, thereby implementing a low-latency or zero-interruption multi-network concurrent connection scenario.

A link indicator changes with a factor such as a network status, a service requirement, or a device status. In view of this, based on the link indicator or a user configuration, the first device may need to continue to implement the multi-network concurrent connection scenario, may need to disconnect the multi-link connection from the third device, or may need to implement a roaming scenario.

When channel quality of the first link, the second link, the third link, and the fourth link basically remains unchanged, the first device may continue to separately implement multi-network concurrent connections to the second device and the third device.

When channel quality of the first link and the second link is better than channel quality of the third link and the fourth link, the first device may disconnect the second link set from the third device, and the first device may continue to implement the multi-network concurrent connection scenario with the second device.

For a specific implementation in which the first device disconnects the second link set from the third device, refer to the description about that the first device disconnects the first link set from the second device in S701 shown in FIG. 16. Details are not described herein again.

When channel quality of the third link and the fourth link is better than channel quality of the first link and the second link, because the first device can support connection-before-disconnection roaming, the first device may disconnect the first link set from the second device, and the first device may continue to implement the multi-network concurrent connection to the third device. Therefore, the first device can implement the roaming scenario.

With reference to FIG. 16, the following describes in detail a specific implementation in which a first device implements a roaming scenario.

FIG. 16 is an interaction flowchart of a multi-link concurrent connection method according to an embodiment of this application. As shown in FIG. 16, the multi-link concurrent connection method provided in this application may include the following steps.

S701: The first device disconnects a first link set from a second device.

A plurality of affiliated STAs in the first device may disconnect all links in the first link set from a plurality of affiliated APs in the second device, that is, the first device may remove all the links in the first link set with the second device.

Removal is opposite to establishment. A process from absence to presence of a link may be referred to as establishment. A process from presence to absence of a link may be referred to as removal or disconnection. After a link is established, the link can be enabled or disabled.

In a possible implementation, the first device sends twelfth information to the second device on one or more links in the first link set, where the twelfth information indicates to remove the first link set.

Based on the embodiment shown in FIG. 4 and FIG. 5, if a first link is disabled, the first device may select one or more links from other links except for the first link in the first link set, to send twelfth information to the second device. Based on the embodiments shown in FIG. 6 and FIG. 7, if a first link and a second link are enabled, the first device may select one or more links from the first link set, to send twelfth information to the second device.

A specific implementation of the twelfth information is not limited in this application.

In some embodiments, the fourth information may be carried in a twelfth frame. The twelfth frame may be one or more frames. The twelfth frame may use an existing frame structure in the 802.11 series standards, for example, a beacon frame, a probe request frame, an association request frame, a reassociation request frame, an authentication frame, a disassociation frame, or a frame in another format in a management frame, or may use a newly generated frame structure in the 802.11 series standards. This is not limited in this application.

For example, the twelfth frame is a disassociation frame (disassociation frame), and the disassociation frame is used to indicate to disconnect the first link set.

S702: The first device and a third device transmit a service between the first device and the third device to each other on a third link and/or a fourth link.

The first device and the third device may select, based on factors such as a network status, a service requirement, or a device status through traffic identifier-to-link mapping (TID-to-link mapping) negotiation, one or more links from the third link and/or the fourth link, to transmit a service between the first device and the third device.

To be specific, an affiliated STA that is in the first device and that corresponds to the selected link and an affiliated AP that is in the third device and that corresponds to the selected link may perform service transmission between the first device and the third device.

It should be understood that the first device may support a traffic identifier-to-link mapping (TID-to-link mapping) negotiation function.

In conclusion, the first device may switch from both a multi-link connection to the second device and a multi-link connection to the third device to a multi-link connection to the third device, to reduce an interruption time caused by disconnection-before-connection in a roaming scenario, thereby implementing a low-latency or zero-interruption roaming scenario.

In addition, in a roaming scenario or a multi-network concurrent connection scenario, the first device and the third device may transmit a service between the first device and the third device to each other on the fourth link. However, based on the descriptions of the embodiments shown in FIG. 4 and FIG. 6, the first device and the third device stop transmitting services of all service types between the first device and the third device to each other on the fourth link. In this case, the first device needs to resume enabling the fourth link with the third device.

Still with reference to FIG. 16, before the first device transmits the service between the first device and the third device on the fourth link in S702, the multi-link concurrent connection method provided in this application may further include the following steps.

S7031: The first device sends fourth information to the third device on the third link, where the fourth information is used to request to transmit the service between the first device and the third device on the fourth link.

Based on the descriptions of the embodiments shown in FIG. 4 and FIG. 6, the first device enables the third link with the third device. Based on this, an affiliated STA that is in the first device and that corresponds to the third link can send the fourth information to an affiliated AP that is in the third device and that corresponds to the third link.

S7032: The third device sends fifth information to the first device on the third link, where the fifth information is used to determine to transmit the service between the first device and the third device on the fourth link.

The third device may determine, based on the fourth information, whether to enable the fourth link.

After determining to enable the fourth link, the affiliated AP that is in the third device and that corresponds to the third link may send the fifth information to the affiliated STA that is in the first device and that corresponds to the third link, so that the first device can learn, based on the fifth information, that the third device agrees to enable the fourth link.

Therefore, the first device and the third device can transmit the service between the first device and the third device to each other on the fourth link.

Specific implementations of the fourth information and the fifth information are not limited in this application.

In a possible implementation, the fourth information may be carried in a fourth frame, and the fifth information may be carried in a fifth frame. The fourth frame or the fifth frame may be one or more frames. The fourth frame or the fifth frame may use an existing frame structure in the 802.11 series standards, for example, a beacon frame, a probe request frame, an association request frame, a reassociation request frame, an authentication frame, or a frame in another format in a management frame, or may use a newly generated frame structure in the 802.11 series standards. This is not limited in this application.

For example, the fourth frame is a traffic identifier-to-link mapping request frame (TID-to-link mapping request frame), and correspondingly, the fifth frame is a traffic identifier-to-link mapping response frame (TID-to-link mapping response frame).

In addition, for a specific implementation of the foregoing traffic identifier-to-link mapping request frame for requesting to resume enabling the fourth link, refer to the description about the traffic identifier-to-link mapping request frame for requesting to disable the first link in the embodiment shown in FIG. 8. For a specific implementation of the foregoing traffic identifier-to-link mapping response frame, refer to the description about the traffic identifier-to-link mapping response frame in the embodiment shown in FIG. 8. Details are not described herein again.

In conclusion, the first device needs to resume enabling the fourth link with the third device.

Based on the descriptions of the embodiments shown in FIG. 4 and FIG. 6, the first device may enable the third link and disable the fourth link, with the third device. Based on this, the first device may request, on a channel corresponding to an operating frequency of the third link, the third device to establish the second link set and disable the fourth link. Therefore, the first device can establish the multi-link connection to the third device via the second link set in a plurality of implementations.

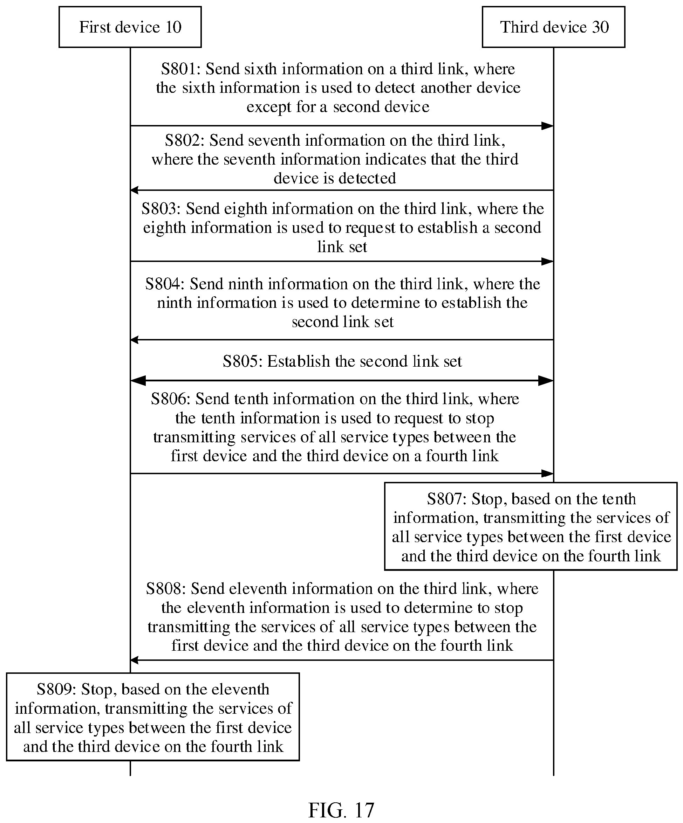

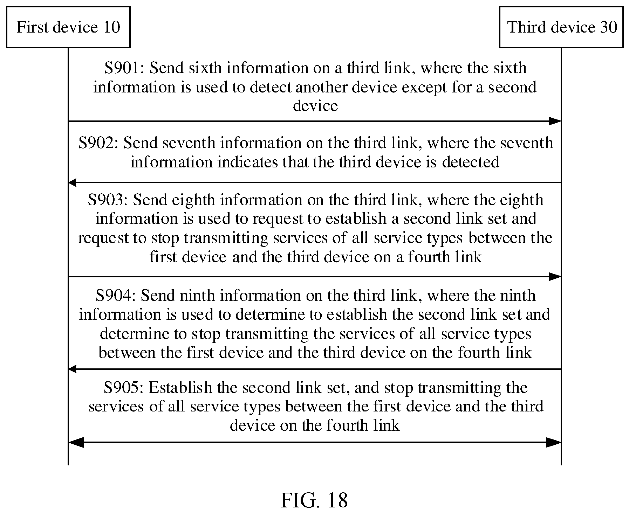

With reference to FIG. 17 and FIG. 18, the following describes in detail a specific implementation in which a first device establishes a multi-link connection to a third device via a second link set.

FIG. 17 is an interaction flowchart of a multi-link concurrent connection method according to an embodiment of this application. As shown in FIG. 17, the multi-link concurrent connection method provided in this application may include the following steps.

S801: The first device sends sixth information on a third link, where the sixth information is used to detect another device except for the second device.

An affiliated STA that is in the first device and that corresponds to the third link may send the sixth information, so that an affiliated AP that is in the third device and that corresponds to the third link can receive the sixth information.

S802: The third device sends seventh information to the first device on the third link, where the seventh information indicates that the third device is detected.

After receiving the sixth information, the affiliated AP that is in the third device and that corresponds to the third link may send the seventh information to the affiliated STA that is in the first device and that corresponds to the third link, so that the first device can determine, based on the seventh information, that the third device is successfully detected.

S803: The first device sends eighth information to the third device on the third link, where the eighth information is used to request to establish the second link set.

The affiliated STA that is in the first device and that corresponds to the third link may send the eighth information to the affiliated AP that is in the third device and that corresponds to the third link, so that the third device learns, based on the eighth information, that the first device requests to establish the second link set.

S804: The third device sends ninth information to the first device on the third link, where the ninth information is used to determine to establish the second link set.

The third device may determine, based on the ninth information, whether to establish the second link set.

After determining to establish the second link set, the affiliated AP that is in the third device and that corresponds to the third link may send the ninth information to the affiliated STA that is in the first device and that corresponds to the third link, so that the first device can learn, based on the ninth information, that the third device agrees to establish the second link set.

S805: The first device establishes the second link set with the third device.

A plurality of affiliated STAs in the first device may establish all links in the second link set with a plurality of affiliated APs in the third device, that is, the first device may establish all the links in the second link set with the third device.

When the first device establishes the second link set with the third device, the first device may notify the third device of a link that is of the first device and that can establish a connection to the third device, or may notify the first device of all links of the first device. This is not limited in this application. Optionally, the first device may further notify the third device of which link or links are to be disabled, which link or links cannot be established, or the like. Correspondingly, the third device may select some or all links from these links based on an actual situation. The third device may notify the first device of these links. Therefore, the first device can establish the second link set with the third device.

It should be understood that S804 and S805 are not subject to a time sequence, and S804 and S805 may be simultaneously performed, or may be sequentially performed.

S806: The first device sends tenth information to the third device on the third link, where the tenth information is used to request to stop transmitting services of all service types between the first device and the third device on a fourth link.

After the second link set is established, the affiliated STA that is in the first device and that corresponds to the third link may send the tenth information to the affiliated AP that is in the third device and that corresponds to the third link, so that the first device determines to stop transmitting the services of all service types between the first device and the third device on the fourth link.

It should be understood that, if the second link set further includes another link in addition to the third link and the fourth link, the first device may select one or more links, for example, the third link and/or the another link, from other links except for the fourth link in the second link set.

S807: The third device stops, based on the tenth information, transmitting the services of all service types between the first device and the third device on the fourth link.

S808: The third device sends eleventh information to the first device on the third link, where the eleventh information is used to determine to stop transmitting the services of all service types between the first device and the third device on the fourth link.

S809: The first device stops, based on the eleventh information, transmitting the services of all service types between the first device and the third device on the fourth link.

The third device may determine, based on the tenth information, whether to disable the fourth link.

After determining to disable the fourth link, the third device may disable the fourth link based on the tenth information. In addition, the affiliated AP that is in the third device and that corresponds to the third link may send the eleventh information to the affiliated STA that is in the first device and that corresponds to the third link, so that the first device can learn, based on the eleventh information, that the third device agrees to disable the fourth link. Therefore, the first device can disable the fourth link based on the eleventh information.

Therefore, the first device and the third device can stop transmitting the services of all service types between the first device and the third device to each other on the fourth link.

Specific implementations of the sixth information, the seventh information, the eighth information, the ninth information, the tenth information, and the eleventh information are not limited in this application.

In a possible implementation, the sixth information may be carried in a sixth frame, the seventh information may be carried in a seventh frame, the eighth information may be carried in an eighth frame, the ninth information may be carried in a ninth frame, the tenth information may be carried in a tenth frame, and the eleventh information may be carried in an eleventh frame. The sixth frame, the seventh frame, the eighth frame, the ninth frame, the tenth frame, or the eleventh frame may be one or more frames. The sixth frame, the seventh frame, the eighth frame, the ninth frame, the tenth frame, or the eleventh frame may use an existing frame structure in the 802.11 series standards, for example, a beacon frame, a probe request frame, an association request frame, a reassociation request frame, an authentication frame, or a frame in another format in a management frame, or may use a newly generated frame structure in the 802.11 series standards. This is not limited in this application.

For example, the sixth frame is a probe request frame (probe request frame), and correspondingly, the seventh frame is a probe response frame (probe response frame). The eighth frame is an authentication frame (authentication frame) and an association request frame (association request frame), and correspondingly, the ninth frame is an association response frame (association response frame). The tenth frame is a traffic identifier-to-link mapping request frame (TID-to-link mapping request frame), and correspondingly, the eleventh frame is a traffic identifier-to-link mapping response frame (TID-to-link mapping response frame).

In some embodiments, the association request frame or the association response frame may include a basic multi-link element (basic multi-link element), and a link identifier (link ID) subfield of an affiliated STA control (STA control) field in a per-STA profile (per-STA profile) subelement may be configured based on information corresponding to an affiliated STA in the first device.

In addition, for a specific implementation of the foregoing traffic identifier-to-link mapping request frame for requesting to disable the fourth link, refer to the description about the traffic identifier-to-link mapping request frame for requesting to disable the first link in the embodiment shown in FIG. 8. For a specific implementation of the foregoing traffic identifier-to-link mapping response frame, refer to the description about the traffic identifier-to-link mapping response frame in the embodiment shown in FIG. 8. Details are not described herein again.

In conclusion, the first device can establish the multi-link connection to the third device via the second link set.

FIG. 18 is an interaction flowchart of a multi-link concurrent connection method according to an embodiment of this application. As shown in FIG. 18, the multi-link concurrent connection method provided in this application may include the following steps.

S901: A first device sends sixth information on a third link, where the sixth information is used to detect another device except for a second device.

S902: A third device sends seventh information to the first device on the third link, where the seventh information indicates that the third device is detected.

Implementations of S901 and S902 are respectively similar to those of S801 and S802 in the embodiment shown in FIG. 17. Details are not described herein again in this application.

S903: The first device sends eighth information to the third device on the third link, where the eighth information is used to request to establish a second link set and request to stop transmitting services of all service types between the first device and the third device on a fourth link.

An affiliated STA that is in the first device and that corresponds to the third link may send the eighth information to an affiliated AP that is in the third device and that corresponds to the third link, so that the third device learns, based on the eighth information, that the first device requests to establish the second link set and requests to disable the fourth link.

S904: The third device sends ninth information to the first device on the third link, where the ninth information is used to determine to establish the second link set and determine to stop transmitting the services of all service types between the first device and the third device on the fourth link.

The third device may determine, based on the ninth information, whether to establish the second link set and whether to disable the fourth link.

After determining to establish the second link set and determining to disable the fourth link, the affiliated AP that is in the third device and that corresponds to the third link may send the ninth information to the affiliated STA that is in the first device and that corresponds to the third link, so that the first device can learn, based on the ninth information, that the third device agrees to establish the second link set and agrees to disable the fourth link.

S905: The first device establishes the second link set with the third device, and stops transmitting the services of all service types between the first device and the third device on the fourth link.

A plurality of affiliated STAs in the first device may establish all links in the second link set with a plurality of affiliated APs in the third device, that is, the first device and the third device may establish all the links in the second link set and stop transmitting the services of all service types between the first device and the third device on the fourth link.

When the first device establishes the second link set with the third device, the first device may notify the third device of a link that is of the first device and that can establish a connection to the third device, or may notify the first device of all links of the first device. This is not limited in this application. In addition, the first device may further notify the third device of which link or links are to be disabled. Correspondingly, the third device may select some or all links from these links based on an actual situation. The third device may notify the first device of these links. Therefore, the first device may establish the second link set and disable the fourth link, with the third device.

Therefore, the first device may establish the second link set with the third device, and stop transmitting the services of all service types between the first device and the third device on the fourth link.

Specific implementations of the sixth information, the seventh information, the eighth information, and the ninth information are not limited in this application.

In a possible implementation, the sixth information may be carried in a sixth frame, the seventh information may be carried in a seventh frame, the eighth information may be carried in an eighth frame, and the ninth information may be carried in a ninth frame. The sixth frame, the seventh frame, the eighth frame, or the ninth frame may be one or more frames. The sixth frame, the seventh frame, the eighth frame, or the ninth frame may use an existing frame structure in the 802.11 series standards, for example, a beacon frame, a probe request frame, an association request frame, a reassociation request frame, an authentication frame, or a frame in another format in a management frame, or may use a newly generated frame structure in the 802.11 series standards. This is not limited in this application.

For example, the sixth frame is a probe request frame (probe request frame), and correspondingly, the seventh frame is a probe response frame (probe response frame). The eighth frame is an authentication frame (authentication frame) and an association request frame (association request frame), and correspondingly, the ninth frame is an association response frame (association response frame).

In some embodiments, the association request frame or the association response frame may include a basic multi-link element (basic multi-link element), and a link identifier (link ID) subfield of an affiliated STA control (STA control) field in a per-STA profile (per-STA profile) subelement may be configured based on information corresponding to an affiliated STA in the first device.

In conclusion, the first device can establish a multi-link connection to the third device via the second link set.

In addition, a difference between the embodiments shown in FIG. 17 and FIG. 18 lies in that establishment of the second link set and disabling of the fourth link can be indicated by a plurality of pieces of information in FIG. 17, and establishment of the second link set and disabling of the fourth link can be indicated by one piece of information in FIG. 18.

Based on the descriptions of the embodiments shown in FIG. 5 and FIG. 7, the first device may enable the third link and enable the fourth link, with the third device. Based on this, the first device may request, on channels/a channel corresponding to operating frequencies/an operating frequency of the third link and/or the fourth link, the third device to establish the second link set. Therefore, the first device can establish the multi-link connection to the third device via the second link set in a plurality of implementations.

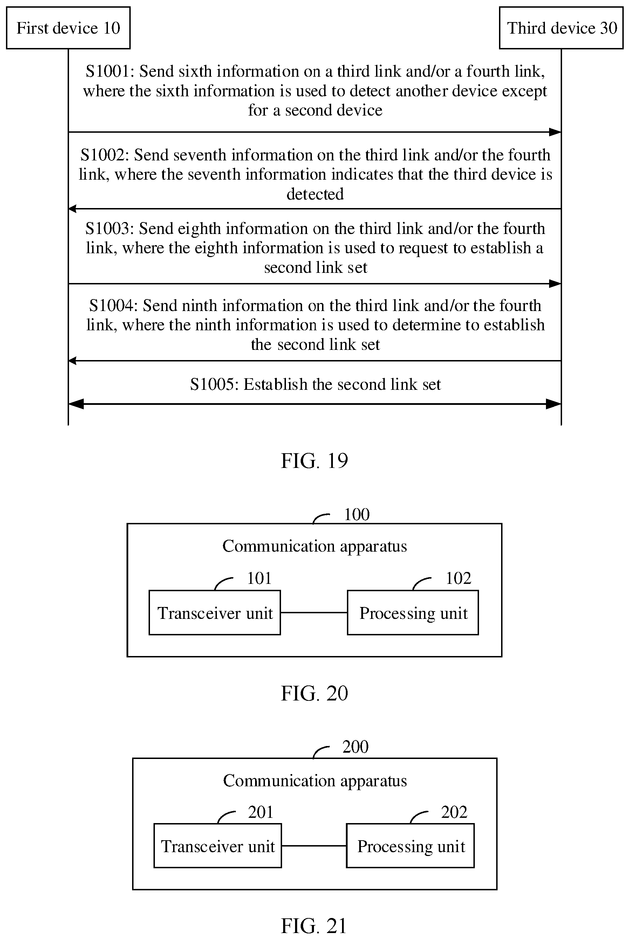

With reference to FIG. 19, the following describes in detail a specific implementation in which a first device establishes a multi-link connection to a third device via a second link set.

FIG. 19 is an interaction flowchart of a multi-link concurrent connection method according to an embodiment of this application. As shown in FIG. 19, the multi-link concurrent connection method provided in this application may include the following steps.

S1001: A first device sends sixth information on a third link and/or a fourth link, where the sixth information is used to detect another device except for a second device.

For a specific implementation in which the first device sends the sixth information on the third link and/or the fourth link in S1001, refer to the description about that the first device sends the sixth information on the third link in S801 in the embodiment shown in FIG. 17. Details are not described herein again.

S1002: A third device sends seventh information to the first device on the third link and/or the fourth link, where the seventh information indicates that the third device is detected.

For a specific implementation in which the third device sends the seventh information to the first device on the third link and/or the fourth link in S1002, refer to the description about that the third device sends the seventh information to the first device on the third link in S802 in the embodiment shown in FIG. 17. Details are not described herein again.

S1003: The first device sends eighth information to the third device on the third link and/or the fourth link, where the eighth information is used to request to establish a second link set.

For a specific implementation in which the first device sends the eighth information to the third device on the third link and/or the fourth link in S1003, refer to the description about that the first device sends the eighth information to the third device on the third link in S803 in the embodiment shown in FIG. 17. Details are not described herein again.

S1004: The third device sends ninth information to the first device on the third link and/or the fourth link, where the ninth information is used to determine to establish the second link set.

For a specific implementation in which the third device sends the ninth information to the first device on the third link and/or the fourth link in S1004, refer to the description about that the third device sends the ninth information to the first device on the third link in S804 in the embodiment shown in FIG. 17. Details are not described herein again.

S1005: The first device establishes the second link set with the third device.

For a specific implementation in which the first device establishes the second link set with the third device in S1005, refer to the description about that the first device establishes the second link set with the third device in S805 in the embodiment shown in FIG. 17. Details are not described herein again.

Specific implementations of the sixth information, the seventh information, the eighth information, and the ninth information are not limited in this application.

In a possible implementation, the sixth information may be carried in a sixth frame, the seventh information may be carried in a seventh frame, the eighth information may be carried in an eighth frame, and the ninth information may be carried in a ninth frame. The sixth frame, the seventh frame, the eighth frame, or the ninth frame may be one or more frames. The sixth frame, the seventh frame, the eighth frame, or the ninth frame may use an existing frame structure in the 802.11 series standards, for example, a beacon frame, a probe request frame, an association request frame, a reassociation request frame, an authentication frame, or a frame in another format in a management frame, or may use a newly generated frame structure in the 802.11 series standards. This is not limited in this application.

For example, the sixth frame is a probe request frame (probe request frame), and correspondingly, the seventh frame is a probe response frame (probe response frame). The eighth frame is an authentication frame (authentication frame) and an association request frame (association request frame), and correspondingly, the ninth frame is an association response frame (association response frame).

In some embodiments, the association request frame or the association response frame may include a basic multi-link element (basic multi-link element), and a link identifier (link ID) subfield of an affiliated STA control (STA control) field in a per-STA profile (per-STA profile) subelement may be configured based on information corresponding to an affiliated STA in the first device.

In conclusion, the first device can establish a multi-link connection to the third device via the second link set.

For example, this application further provides a communication apparatus.

FIG. 20 is a diagram of a structure of a communication apparatus according to an embodiment of this application.

As shown in FIG. 20, the communication apparatus 100 may exist independently, or may be integrated into another device, and may communicate with the second device and the third device mentioned above, to implement an operation corresponding to the first device in any one of the foregoing method embodiments.

The communication apparatus 100 may include a transceiver unit 101 and a processing unit 102. The transceiver unit 101 may implement a corresponding communication function. The transceiver unit 101 may also be referred to as a communication interface or a communication unit. The processing unit 102 is configured to process data.

Optionally, the communication apparatus 100 may further include a storage unit. The storage unit may be configured to store instructions and/or data. The processing unit 102 may read the instructions and/or data in the storage unit, so that the communication apparatus 100 implements the foregoing method embodiments.

The communication apparatus 100 may be configured to perform an action performed by the first device in the foregoing method embodiments. The communication apparatus 100 may be the first device or a part that can be disposed in the first device. The transceiver unit 101 is configured to perform a receiving-related operation of the first device in the foregoing method embodiments.

Optionally, the transceiver unit 101 may include a sending unit and a receiving unit. The sending unit is configured to perform a sending operation in the foregoing method embodiments. The receiving unit is configured to perform a receiving operation in the foregoing method embodiments.

It should be noted that the communication apparatus 100 may include the sending unit, but does not include the receiving unit, or the communication apparatus 100 may include the receiving unit, but does not include the sending unit. Specifically, this may depend on whether the foregoing solution performed by the communication apparatus 100 includes a sending action and a receiving action.

In an example, the communication apparatus 100 is configured to perform an action performed by the first device in the embodiments shown in FIG. 1 to FIG. 19.

The communication apparatus 100 may include a transceiver unit 101 and a processing unit 102.

The transceiver unit 101 and the processing unit 102 are configured to establish a multi-link connection to the second device via a first link set, where the first link set includes a first link and a second link.

The transceiver unit 101 and the processing unit 102 are further configured to establish a multi-link connection to the third device via a second link set, where the second link set includes a third link and a fourth link, and operating frequencies of the third link and the first link are the same, or operating frequencies of the third link, the first link, and the second link are all different.

It should be understood that the foregoing corresponding processes performed by the units are described in detail in the foregoing method embodiments. For brevity, details are not described herein again.

The processing unit 102 in the foregoing embodiments may be implemented by at least one processor or a processor-related circuit. The transceiver unit 101 may be implemented by a transceiver or a transceiver-related circuit. The transceiver unit 101 may also be referred to as a communication unit or a communication interface. The storage unit may be implemented by at least one memory.

For example, this application further provides a communication apparatus.

FIG. 21 is a diagram of a structure of a communication apparatus according to an embodiment of this application.

As shown in FIG. 21, the communication apparatus 200 may exist independently, or may be integrated into another device, and may communicate with the first device mentioned above, to implement an operation corresponding to the second device in any one of the foregoing method embodiments.

The communication apparatus 200 may include a transceiver unit 201 and a processing unit 202. The transceiver unit 201 may implement a corresponding communication function, and the processing unit is configured to process data. The transceiver unit 201 may also be referred to as a communication interface or a communication unit. The processing unit 202 is configured to process data.

Optionally, the communication apparatus 200 may further include a storage unit. The storage unit may be configured to store instructions and/or data. The processing unit 202 may read the instructions and/or data in the storage unit, so that the communication apparatus 200 implements the foregoing method embodiments.

The communication apparatus 200 may be configured to perform an action performed by the second device in the foregoing method embodiments. The communication apparatus 200 may be the second device or a part that can be disposed in the second device. The transceiver unit 201 is configured to perform a receiving-related operation of the second device in the foregoing method embodiments, and the processing unit 202 is configured to perform a processing-related operation of the second device in the foregoing method embodiments.

Optionally, the transceiver unit 201 may include a sending unit and a receiving unit. The sending unit is configured to perform a sending operation in the foregoing method embodiments. The receiving unit is configured to perform a receiving operation in the foregoing method embodiments.

It should be noted that the communication apparatus 200 may include the sending unit, but does not include the receiving unit, or the communication apparatus 200 may include the receiving unit, but does not include the sending unit. Specifically, this may depend on whether the foregoing solution performed by the communication apparatus 200 includes a sending action and a receiving action.

In an example, the communication apparatus 200 is configured to perform an action performed by the second device in the embodiments shown in FIG. 1 to FIG. 16.

The communication apparatus 200 may include a transceiver unit 201 and a processing unit 202.

The transceiver unit 201 and the processing unit 202 are configured to establish a multi-link connection to the first device via a first link set, where the first link set includes a first link and a second link; and the first device further establishes a multi-link connection to the third device via a second link set, where the second link set includes a third link and a fourth link, and operating frequencies of the third link and the first link are the same, or operating frequencies of the third link, the first link, and the second link are all different.

It should be understood that the foregoing corresponding processes performed by the units are described in detail in the foregoing method embodiments. For brevity, details are not described herein again.

The processing unit 202 in the foregoing embodiments may be implemented by at least one processor or a processor-related circuit. The transceiver unit 201 may be implemented by a transceiver or a transceiver-related circuit. The transceiver unit may also be referred to as a communication unit or a communication interface. The storage unit may be implemented by at least one memory.

For example, this application further provides a communication apparatus.

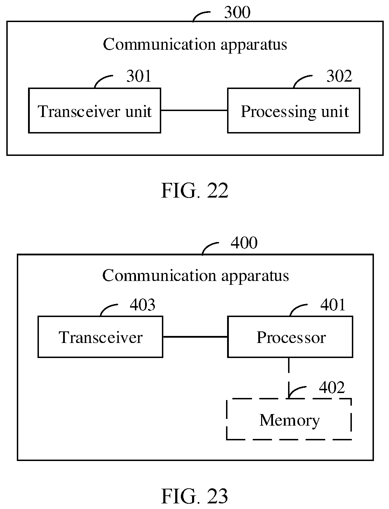

FIG. 22 is a diagram of a structure of a communication apparatus according to an embodiment of this application.

As shown in FIG. 22, the communication apparatus 300 may exist independently, or may be integrated into another device, and may communicate with the first device mentioned above, to implement an operation corresponding to the third device in any one of the foregoing method embodiments.

The communication apparatus 300 may include a transceiver unit 301 and a processing unit 302. The transceiver unit 301 may implement a corresponding communication function. The transceiver unit 301 may also be referred to as a communication interface or a communication unit. The processing unit 302 is configured to process data.

Optionally, the communication apparatus 300 may further include a storage unit. The storage unit may be configured to store instructions and/or data. The processing unit 302 may read the instructions and/or data in the storage unit, so that the communication apparatus 300 implements the foregoing method embodiments.

The communication apparatus 300 may be configured to perform an action performed by the third device in the foregoing method embodiments. The communication apparatus 300 may be the third device or a part that can be disposed in the third device. The transceiver unit 301 is configured to perform a receiving-related operation of the third device in the foregoing method embodiments.

Optionally, the transceiver unit 301 may include a sending unit and a receiving unit. The sending unit is configured to perform a sending operation in the foregoing method embodiments. The receiving unit is configured to perform a receiving operation in the foregoing method embodiments.

It should be noted that the communication apparatus 300 may include the sending unit, but does not include the receiving unit, or the communication apparatus 300 may include the receiving unit, but does not include the sending unit. Specifically, this may depend on whether the foregoing solution performed by the communication apparatus 300 includes a sending action and a receiving action.

In an example, the communication apparatus 300 is configured to perform an action performed by the third device in the embodiments shown in FIG. 1 to FIG. 14 and FIG. 17 to FIG. 19.

The communication apparatus 300 may include a transceiver unit 301 and a processing unit 302.

The transceiver unit 301 and the processing unit 302 are configured to establish a multi-link connection to the first device via a second link set, where the second link set includes a third link and a fourth link; and the first device further establishes a multi-link connection to the second device via a first link set, where the first link set includes a first link and a second link, and operating frequencies of the third link and the first link are the same, or operating frequencies of the third link, the first link, and the second link are all different.

It should be understood that the foregoing corresponding processes performed by the units are described in detail in the foregoing method embodiments. For brevity, details are not described herein again.

The processing unit 302 in the foregoing embodiments may be implemented by at least one processor or a processor-related circuit. The transceiver unit 301 may be implemented by a transceiver or a transceiver-related circuit. The transceiver unit 301 may also be referred to as a communication unit or a communication interface. The storage unit may be implemented by at least one memory.

For example, this application further provides a communication apparatus.

FIG. 23 is a diagram of a hardware structure of a communication apparatus according to an embodiment of this application.

The communication apparatus 400 includes a processor 401. The processor 401 is coupled to a memory 402. The memory 402 is configured to store a computer program or instructions and/or data. The processor 401 is configured to execute the computer program or instructions and/or the data stored in the memory 402, to perform the method in the foregoing method embodiments.

Optionally, the communication apparatus 400 includes one or more processors 401.

Optionally, as shown in FIG. 23, the communication apparatus 400 may further include the memory 402.

Optionally, the communication apparatus 400 includes one or more memories 402.

Optionally, the memory 402 and the processor 401 may be integrated together, or separately disposed.

As shown in FIG. 23, the communication apparatus 400 may further include a transceiver 403. The transceiver 403 is configured to receive and/or send a signal. For example, the processor 401 is configured to control the transceiver 403 to receive and/or send a signal.

In a solution, the communication apparatus 400 is configured to implement an operation performed by the first device in the foregoing method embodiments.

For example, the processor 401 is configured to implement a processing-related operation performed by the first device in the foregoing method embodiments, and the transceiver 403 is configured to implement a receiving/sending-related operation performed by the first device in the foregoing method embodiments.

In another solution, the communication apparatus 400 is configured to implement an operation performed by the second device in the foregoing method embodiments.

For example, the processor 401 is configured to implement a processing-related operation performed by the second device in the foregoing method embodiments, and the transceiver 403 is configured to implement a receiving/sending-related operation performed by the second device in the foregoing method embodiments.

In another solution, the communication apparatus 400 is configured to implement an operation performed by the third device in the foregoing method embodiments.

For example, the processor 401 is configured to implement a processing-related operation performed by the third device in the foregoing method embodiments, and the transceiver 403 is configured to implement a receiving/sending-related operation performed by the third device in the foregoing method embodiments.

In the communication apparatus 400 shown in FIG. 23, a component that is in the transceiver 403 and that is configured to receive power may be considered as a receiving unit, and a component that is in the transceiver 403 and that is configured to implement a sending function may be considered as a sending unit. That is, the transceiver 403 may include a receiver and a transmitter. The transceiver 403 may also be referred to as a transceiver machine, a transceiver unit, a transceiver circuit, or the like. The receiver may also be referred to as a receiver machine, a receiving unit, a receiver, a receive circuit, or the like. The transmitter may also be referred to as a transmitter machine, a transmitter, a transmitting unit, a transmit circuit, or the like. The processor 401 has a processing function, and the processor 401 may be referred to as a processing unit. The memory 402 is configured to store computer program code and data, and the memory 402 may also be referred to as a storage unit.

For example, this application further provides a computer-readable storage medium. The computer-readable storage medium stores computer instructions for implementing the method performed by the first device, the method performed by the second device, or the method performed by the third device in the foregoing method embodiments.

For example, when the computer program is executed by a computer, the computer is enabled to implement the method performed by the first device, the method performed by the second device, or the method performed by the third device in the foregoing method embodiments.

For example, this application further provides a computer program product including instructions. When the instructions are executed by a computer, the computer is enabled to implement the method performed by the first device, the method performed by the second device, or the method performed by the third device in the foregoing method embodiments.

For example, this application further provides a wireless communication system. The wireless communication system includes a first device, a second device, and a third device. The first device is configured to perform a process performed by the first device in the foregoing embodiments. The second device is configured to perform a process performed by the second device in the foregoing embodiments. The third device is configured to perform a process performed by the third device in the foregoing embodiments.

For example, this application further provides a chip apparatus, including a processor, configured to invoke a computer program or computer instructions stored in a memory, so that the processor performs the reference signal processing method in the foregoing embodiments.

In a possible implementation, an input of the chip apparatus corresponds to the receiving operation in the embodiments shown in FIG. 1 to FIG. 19, and an output of the chip apparatus corresponds to the sending operation in the embodiments shown in FIG. 1 to FIG. 19.

Optionally, the processor is coupled to the memory through an interface.

Optionally, the chip apparatus further includes the memory, and the memory stores the computer program or the computer instructions.

The processor mentioned anywhere above may be a general-purpose central processing unit, a microprocessor, a baseband processor, an application-specific integrated circuit (application-specific integrated circuit, ASIC), or one or more integrated circuits configured to control program execution of the reference signal processing method in the foregoing embodiments. The memory mentioned anywhere above may be a read-only memory (read-only memory, ROM), another type of static storage device that can store static information and instructions, a random access memory (random access memory, RAM), or the like.

It may be clearly understood by a person skilled in the art that, for convenience and brevity of description, for explanations and beneficial effect of related content in any one of the communication apparatuses provided above, refer to the corresponding method embodiments provided above. Details are not described herein again.

In this application, the first device, the second device, and the third device each may include a hardware layer, an operating system layer running on the hardware layer, and an application layer running on the operating system layer. The hardware layer may include hardware such as a central processing unit (central processing unit, CPU), a memory management unit (memory management unit, MMU), and a memory (also referred to as main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

It may be clearly understood by a person skilled in the art that, for ease and brevity of description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, in other words, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the part essentially contributing to the technical solutions of this application or all or some of the technical solutions may be implemented in a form of a software product. The computer software product is stored in a storage medium and includes a plurality of instructions for instructing a computer device (which may be a personal computer, a server, or a network device) to perform all or some of the processes of the methods in embodiments of this application. The foregoing storage medium includes any medium that can store program code, such as a USB flash drive, a removable hard disk drive, a read-only memory, a random access memory, a magnetic disk, or an optical disc.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A multi-link concurrent connection method, wherein the method comprises:
establishing, by a first device, a multi-link connection to a second device via a first link set, wherein the first link set comprises a first link and a second link; and
establishing, by the first device, a multi-link connection to a third device via a second link set, wherein the second link set comprises a third link and a fourth link, and operating frequencies of the third link and the first link are the same, or operating frequencies of the third link, the first link, and the second link are all different.

2. The method according to claim 1, wherein data of a link in the first link set is transmitted through a first media access control layer service access point of the first device, data of a link in the second link set is transmitted through a second media access control layer service access point of the first device, and the first media access control layer service access point of the first device is different from the second media access control layer service access point of the first device.

3. The method according to claim 1 or 2, wherein before the establishing, by the first device, a multi-link connection to a third device via a second link set, the method further comprises:
establishing, by the first device, the second media access control layer service access point of the first device.

4. The method according to any one of claims 1 to 3, wherein when the operating frequencies of the third link and the first link are the same and operating frequencies of the fourth link and the second link are the same, the method further comprises:
stopping, by the first device, transmitting services of all service types between the first device and the second device on the first link, and transmitting the service between the first device and the second device on the second link; and
transmitting, by the first device, a service between the first device and the third device on the third link, and stopping transmitting services of all service types between the first device and the third device on the fourth link.

5. The method according to any one of claims 1 to 3, wherein when the operating frequencies of the third link and the first link are the same and operating frequencies of the fourth link, the first link, and the second link are all different, the method further comprises:
stopping, by the first device, transmitting services of all service types between the first device and the second device on the first link, and transmitting the service between the first device and the second device on the second link; and
transmitting, by the first device, a service between the first device and the third device on the third link and/or the fourth link.

6. The method according to any one of claims 1 to 3, wherein when the operating frequencies of the third link, the first link, and the second link are all different and an operating frequency of the fourth link and the operating frequency of the first link or the second link are the same, the method further comprises:
transmitting, by the first device, a service between the first device and the second device on the first link and the second link; and
transmitting, by the first device, a service between the first device and the third device on the third link, and stopping transmitting services of all service types between the first device and the third device on the fourth link.

7. The method according to any one of claims 1 to 3, wherein when the operating frequencies of the third link, the first link, and the second link are all different and operating frequencies of the fourth link, the first link, and the second link are all different, the method further comprises:
transmitting, by the first device, a service between the first device and the second device on the first link and the second link; and
transmitting, by the first device, a service between the first device and the third device on the third link and/or the fourth link.

8. The method according to claim 4 or 5, wherein before the stopping, by the first device, transmitting services of all service types between the first device and the second device on the first link, the method further comprises:
sending, by the first device, first information to the second device on one or more links in the first link set, wherein the first information is used to request to stop transmitting the services of all service types between the first device and the second device on the first link; and
receiving, by the first device on one or more links in the first link set, second information sent by the second device, wherein the second information is used to determine to stop transmitting the services of all service types between the first device and the second device on the first link.

9. The method according to claim 8, wherein the first information is carried in a first frame, and the second information is carried in a second frame.

10. The method according to claim 9, wherein the first frame further carries third information, and the third information indicates, to the second device, whether to stop transmitting the services of all service types between the first device and the second device on the first link.

11. The method according to claim 9 or 10, wherein the first frame is a traffic identifier-to-link mapping request frame, and correspondingly, the second frame is a traffic identifier-to-link mapping response frame.

12. The method according to any one of claims 4 to 11, wherein the method further comprises:
disconnecting, by the first device, the first link set; and
transmitting, by the first device, the service between the first device and the third device on the third link and/or the fourth link.

13. The method according to claim 12, wherein before the transmitting, by the first device, the service between the first device and the third device on the fourth link, the method further comprises:
sending, by the first device, fourth information to the third device on the third link, wherein the fourth information is used to request to transmit the service between the first device and the third device on the fourth link; and
receiving, by the first device on the third link, fifth information sent by the third device, wherein the fifth information is used to determine to transmit the service between the first device and the third device on the fourth link.

14. The method according to claim 13, wherein the fourth information is carried in a fourth frame, and the fifth information is carried in a fifth frame.

15. The method according to claim 14, wherein the fourth frame is a traffic identifier-to-link mapping request frame, and correspondingly, the fifth frame is a traffic identifier-to-link mapping response frame.

16. The method according to any one of claims 4, 6, and 8 to 15, wherein the establishing, by the first device, a multi-link connection to a third device via a second link set comprises:
sending, by the first device, sixth information on the third link, wherein the sixth information is used to detect another device except for the second device;
receiving, by the first device on the third link, seventh information sent by the third device, wherein the seventh information indicates that the third device is detected;
sending, by the first device, eighth information to the third device on the third link, wherein the eighth information is used to request to establish the second link set;
receiving, by the first device on the third link, ninth information sent by the third device, wherein the ninth information is used to determine to establish the second link set;
establishing, by the first device, the second link set with the third device;
sending, by the first device, tenth information to the third device on the third link, wherein the tenth information is used to request to stop transmitting the services of all service types between the first device and the third device on the fourth link;
receiving, by the first device on the third link, eleventh information sent by the third device, wherein the eleventh information is used to determine to stop transmitting the services of all service types between the first device and the third device on the fourth link; and
stopping, by the first device based on the eleventh information, transmitting the services of all service types between the first device and the third device on the fourth link.

17. The method according to claim 16, wherein the sixth information is carried in a sixth frame, the seventh information is carried in a seventh frame, the eighth information is carried in an eighth frame, the ninth information is carried in a ninth frame, the tenth information is carried in a tenth frame, and the eleventh information is carried in an eleventh frame.

18. The method according to claim 17, wherein
the sixth frame is a probe request frame, and correspondingly, the seventh frame is a probe response frame;
the eighth frame is an authentication frame and an association request frame, and correspondingly, the ninth frame is an association response frame; and
the tenth frame is a traffic identifier-to-link mapping request frame, and correspondingly, the eleventh frame is a traffic identifier-to-link mapping response frame.

19. The method according to any one of claims 4, 6, and 8 to 15, wherein the establishing, by the first device, a multi-link connection to a third device via a second link set comprises:
sending, by the first device, sixth information on the third link, wherein the sixth information is used to detect another device except for the second device;
receiving, by the first device on the third link, seventh information sent by the third device, wherein the seventh information indicates that the third device is detected;
sending, by the first device, eighth information to the third device on the third link, wherein the eighth information is used to request to establish the second link set and request to stop transmitting the services of all service types between the first device and the third device on the fourth link;
receiving, by the first device on the third link, ninth information sent by the third device, wherein the ninth information is used to determine to establish the second link set and determine to stop transmitting the services of all service types between the first device and the third device on the fourth link; and
establishing, by the first device, the second link set with the third device, and stopping transmitting the services of all service types between the first device and the third device on the fourth link.

20. The method according to claim 19, wherein the sixth information is carried in a sixth frame, the seventh information is carried in a seventh frame, the eighth information is carried in an eighth frame, and the ninth information is carried in a ninth frame.

21. The method according to claim 20, wherein
the sixth frame is a probe request frame, and correspondingly, the seventh frame is a probe response frame; and
the eighth frame is an authentication frame and an association request frame, and correspondingly, the ninth frame is an association response frame.

22. The method according to any one of claims 5 and 7 to 15, wherein the establishing, by the first device, a multi-link connection to a third device via a second link set comprises:
sending, by the first device, sixth information on the third link and/or the fourth link, wherein the sixth information is used to detect another device except for the second device;
receiving, by the first device on the third link and/or the fourth link, seventh information sent by the third device, wherein the seventh information indicates that the third device is detected;
sending, by the first device, eighth information to the third device on the third link and/or the fourth link, wherein the eighth information is used to request to establish the second link set;
receiving, by the first device on the third link and/or the fourth link, ninth information sent by the third device, wherein the ninth information is used to determine to establish the second link set; and
establishing, by the first device, the second link set with the third device.

23. The method according to claim 22, wherein the sixth information is carried in a sixth frame, the seventh information is carried in a seventh frame, the eighth information is carried in an eighth frame, and the ninth information is carried in a ninth frame.

24. The method according to claim 23, wherein
the sixth frame is a probe request frame, and correspondingly, the seventh frame is a probe response frame; and
the eighth frame is an authentication frame and an association request frame, and correspondingly, the ninth frame is an association response frame.

25. A multi-link concurrent connection method, wherein the method comprises:
establishing, by a third device, a multi-link connection to a first device via a second link set, wherein the second link set comprises a third link and a fourth link; and further establishing, by the first device, a multi-link connection to a second device via a first link set, wherein the first link set comprises a first link and a second link, and operating frequencies of the third link and the first link are the same, or operating frequencies of the third link, the first link, and the second link are all different.

26. The method according to claim 25, wherein data of a link in the first link set is transmitted through a first media access control layer service access point of the first device, data of a link in the second link set is transmitted through a second media access control layer service access point of the first device, and the first media access control layer service access point of the first device is different from the second media access control layer service access point of the first device.

27. The method according to claim 25 or 26, wherein when operating frequencies of the fourth link and the second link are the same or an operating frequency of the fourth link and the operating frequency of the first link or the second link are the same, the method further comprises:
transmitting, by the third device, a service between the first device and the third device on the third link, and stopping transmitting services of all service types between the first device and the third device on the fourth link.

28. The method according to claim 27, wherein the method further comprises:
transmitting, by the third device, the service between the first device and the third device on the third link and/or the fourth link.

29. The method according to claim 28, wherein before the transmitting, by the third device, the service between the first device and the third device on the fourth link, the method further comprises:
receiving, by the third device on the third link, fourth information sent by the first device, wherein the fourth information is used to request to transmit the service between the first device and the third device on the fourth link;
determining, by the third device based on the fourth information, to transmit the service between the first device and the third device on the fourth link; and
sending, by the third device, fifth information to the first device on the third link, wherein the fifth information is used to determine to transmit the service between the first device and the third device on the fourth link.

30. The method according to claim 29, wherein the fourth information is carried in a fourth frame, and the fifth information is carried in a fifth frame.

31. The method according to claim 30, wherein the fourth frame is a traffic identifier-to-link mapping request frame, and correspondingly, the fifth frame is a traffic identifier-to-link mapping response frame.

32. The method according to any one of claims 27 to 31, wherein the establishing, by a third device, a multi-link connection to a first device via a second link set comprises:
receiving, by the third device on the third link, sixth information sent by the first device, wherein the sixth information is used to detect another device except for the second device;
sending, by the third device, seventh information to the first device on the third link, wherein the seventh information indicates that the third device is detected;
receiving, by the third device on the third link, eighth information sent by the first device, wherein the eighth information is used to request to establish the second link set;
sending, by the third device, ninth information to the first device on the third link, wherein the ninth information is used to determine to establish the second link set;
establishing, by the third device, the second link set with the first device;
receiving, by the third device on the third link, tenth information sent by the first device, wherein the tenth information is used to request to stop transmitting the services of all service types between the first device and the third device on the fourth link;
stopping, by the third device based on the tenth information, transmitting the services of all service types between the first device and the third device on the fourth link; and
sending, by the third device, eleventh information to the first device on the third link, wherein the eleventh information is used to determine to stop transmitting the services of all service types between the first device and the third device on the fourth link.

33. The method according to claim 32, wherein the sixth information is carried in a sixth frame, the seventh information is carried in a seventh frame, the eighth information is carried in an eighth frame, the ninth information is carried in a ninth frame, the tenth information is carried in a tenth frame, and the eleventh information is carried in an eleventh frame.

34. The method according to claim 33, wherein
the sixth frame is a probe request frame, and correspondingly, the seventh frame is a probe response frame; and
the eighth frame is an authentication frame and an association request frame, and correspondingly, the ninth frame is an association response frame; and
the tenth frame is a traffic identifier-to-link mapping request frame, and correspondingly, the eleventh frame is a traffic identifier-to-link mapping response frame.

35. The method according to any one of claims 27 to 31, wherein the establishing, by a third device, a multi-link connection to a first device via a second link set comprises:
receiving, by the third device on the third link, sixth information sent by the first device, wherein the sixth information is used to detect another device except for the second device;
sending, by the third device, seventh information to the first device on the third link, wherein the seventh information indicates that the third device is detected;
receiving, by the third device on the third link, eighth information sent by the first device, wherein the eighth information is used to request to establish the second link set and request to stop transmitting the services of all service types between the first device and the third device on the fourth link;
establishing, by the third device, the second link set based on the seventh information, and stopping transmitting the services of all service types between the first device and the third device on the fourth link;
sending, by the third device, ninth information to the first device on the third link, wherein the ninth information is used to determine to establish the second link set and determine to stop transmitting the services of all service types between the first device and the third device on the fourth link; and
establishing, by the third device, the second link set with the first device, and stopping transmitting the services of all service types between the first device and the third device on the fourth link.

36. The method according to claim 35, wherein the sixth information is carried in a sixth frame, the seventh information is carried in a seventh frame, the eighth information is carried in an eighth frame, and the ninth information is carried in a ninth frame.

37. The method according to claim 36, wherein
the sixth frame is a probe request frame, and correspondingly, the seventh frame is a probe response frame; and
the eighth frame is an authentication frame and an association request frame, and correspondingly, the ninth frame is an association response frame.

38. The method according to claim 25 or 26, wherein when operating frequencies of the fourth link, the first link, and the second link are all different, the method further comprises:
transmitting, by the third device, a service between the first device and the third device on the third link and/or the fourth link.

39. The method according to claim 38, wherein the establishing, by a first device, a multi-link connection to a third device via a second link set comprises:
receiving, by the third device on the third link and/or the fourth link, sixth information sent by the first device, wherein the sixth information is used to detect another device except for the second device;
sending, by the third device, seventh information to the first device on the third link and/or the fourth link, wherein the seventh information indicates that the third device is detected;
receiving, by the third device on the third link and/or the fourth link, eighth information sent by the first device, wherein the eighth information is used to request to establish the second link set;
establishing, by the third device, the second link set based on the eighth information;
sending, by the third device, ninth information to the first device on the third link and/or the fourth link, wherein the ninth information is used to determine to establish the second link set; and
establishing, by the third device, the second link set with the first device.

40. The method according to claim 39, wherein the sixth information is carried in a sixth frame, the seventh information is carried in a seventh frame, the eighth information is carried in an eighth frame, and the ninth information is carried in a ninth frame.

41. The method according to claim 40, wherein
the sixth frame is a probe request frame, and correspondingly, the seventh frame is a probe response frame; and
the eighth frame is an authentication frame and an association request frame, and correspondingly, the ninth frame is an association response frame.

42. A communication apparatus, wherein the apparatus comprises a module configured to perform the method according to any one of claims 1 to 24, or a module configured to perform the method according to any one of claims 25 to 41.

43. A communication apparatus, comprising a processor, wherein
the processor is configured to execute a computer-executable program or instructions in a memory, so that the communication apparatus performs the method according to any one of claims 1 to 24, or the communication apparatus performs the method according to any one of claims 25 to 41.

44. A computer-readable storage medium, wherein the computer-readable storage medium stores a computer-executable program or instructions, and the computer-executable program or instructions are set to perform the method according to any one of claims 1 to 24, or the computer-executable program or instructions are set to perform the method according to any one of claims 25 to 41.

45. A chip, comprising an interface circuit and a logic circuit, wherein the interface circuit is configured to: receive a signal from another chip except for the chip and transmit the signal to the logic circuit, or send a signal from the logic circuit to another chip except for the chip; and the logic circuit is configured to implement the method according to any one of claims 1 to 24; or the logic circuit is configured to implement the method according to any one of claims 25 to 41.
